# EUROPEAN PATENT APPLICATION

(11) **EP 4 752 409 A1**
(43) Date of publication of application: **03.06.2026**
(21) Application number: 25763904.7
(22) Date of filing: 27.05.2025
(51) Int. Cl.: F16K 3/02

(54) **FLUID CONNECTION/DISCONNECTION CONTROL STRUCTURE AND AIR-POWDER POLISHING APPARATUS**

(30) Priority: 18.10.2024 CN 202411461910; 28.02.2025 CN 202510238742; 28.02.2025 CN 202520348761 U; 28.02.2025 CN 202520347722 U; 28.02.2025 CN 202520348815 U; 28.02.2025 CN 202520348753 U; 28.02.2025 CN 202520347380 U
(71) Applicant: Guilin Woodpecker Medical Instrument Co., Ltd., Guilin, Guangxi 541004 (CN)
(72) Inventor: WU, Xunxian, Guilin, Guangxi 541004 (CN); TANG, Peng, Guilin, Guangxi 541004 (CN); WU, Kunyou, Guilin, Guangxi 541004 (CN); ZHOU, Jun, Guilin, Guangxi 541004 (CN); SUN, Chengxiang, Guilin, Guangxi 541004 (CN)
(74) Representative: Petraz, Gilberto Luigi
(86) International application number: PCT/CN2025/097403
(87) International publication number: WO 2026/081483

(57) **Abstract**

Disclosed is a fluid on-off control structure and air polishing dental apparatus. The fluid on-off control structure includes a sealing device and a driving assembly. The sealing device is provided with a target through hole. The driving assembly is provided with a sealing portion, the sealing portion is provided with a piston through hole, and at least one surface contact seal is provided between the sealing portion and the sealing device. The driving assembly is configured to drive the sealing device and/or the sealing portion to connect or disconnect the piston through hole and the target through hole.

## Description

### TECHNICAL FIELD

The present application relates to the technical field of dental medical devices, and in particular, to a fluid on-off control structure and air polishing dental apparatus.

### BACKGROUND

In dentistry, air polishing involves propelling polishing powder (whose main components are usually sodium bicarbonate, glycine, or erythritol) onto the tooth surface using compressed air, combined with a liquid medium (typically water) that is ejected simultaneously with the polishing powder. This process impacts dental plaque and calculus on the tooth surface with certain kinetic energy, thereby achieving the cleaning of the tooth surface.

In practical applications, air polishing dental apparatuses consist of an air polishing main unit and a powder handpiece, which are connected via tubing. After the dental air polishing main unit stops operating, due to the residual air pressure inside the powder handpiece, polishing continues to be ejected, which is not conducive to rapid response control. Therefore, it is necessary to install an on-off control structure between the powder chamber (where compressed air and polishing powder are mixed) and the nozzle (the fluid ejection component) to facilitate quick cutoff of the polishing powder ejection.

In current applications, the on-off control structure provided between the powder chamber and the nozzle is a pinch valve. Its working principle involves a driving mechanism applying thrust to push a pressing rod against a soft tube, thereby compressing and deforming the soft tube to block the internal fluid flow. However, the soft tube is prone to wear and air leakage since the pinch valve controls the on-off state through squeezing force, and the internal fluid contains abrasive particles that frictionally cut the soft tube. This results in deteriorated airtightness and reduced reliability of the air polishing dental apparatus. Therefore, how to improve the airtightness of the fluid on-off control structure, enhance its reliability, and extend its service life has become an urgent problem to be solved.

### SUMMARY

An embodiment of the present application discloses a fluid on-off control structure and air polishing dental apparatus, which may improve the airtightness of the fluid on-off control structure to achieve rapid response and precise control of the polishing powder fluid, with high reliability and long service life.

To achieve the aforementioned objective, in a first aspect, disclosed in the present application is a fluid on-off control structure, including:
a sealing device, where the sealing device is provided with a target through hole;
a driving assembly, where the driving assembly is provided with a sealing portion, the sealing portion is provided with a piston through hole, and at least one surface contact seal is provided between the sealing portion and the sealing device; the driving assembly is configured to drive the sealing device and/or the sealing portion to move, so that the piston through hole and the target through hole are connected or misaligned.

In a second aspect, disclosed in the present application is an air polishing dental apparatus, including:
an apparatus body;
the fluid on-off control structure according to the first aspect of the present application is mounted on the apparatus body.

Compared with the prior art, the beneficial effects of the present application are as follows:
The fluid on-off control structure provided in the present application controls the movement of the sealing device and/or the sealing portion through the driving assembly, thereby connecting or disconnecting the target through hole on the sealing device and the sealing portion. During this process, the sealing device and the sealing portion are less prone to deformation due to external squeezing force, meaning both the sealing device and the sealing portion are less susceptible to wear. This improves the airtightness of the fluid on-off control structure and ensures higher reliability and longer service life.

The fluid on-off control structure provided in the present application adopts the aforementioned fluid on-off control structure. By controlling the movement of the sealing device and/or the sealing portion through the driving assembly, the target through hole on the sealing device and the sealing portion are connected or disconnected. During this process, the sealing device and the sealing portion are less prone to deformation due to external squeezing force, meaning both the sealing device and the sealing portion are less susceptible to wear. This improves the airtightness of the fluid on-off control structure and ensures higher reliability and longer service life.

### BRIEF DESCRIPTION OF THE DRAWINGS

FIG. 1 is a schematic structural diagram of a fluid on-off control structure according to the present application;
FIG. 2 is a schematic structural diagram of a first embodiment of the fluid on-off control structure according to the present application;
FIG. 3 is a schematic structural diagram of a specific embodiment of the fluid on-off control structure according to the present application;
FIG. 4 is a schematic structural diagram of a first pre-compression member and a first sealing member in the fluid on-off control structure according to the present application;
FIG. 5 is a schematic structural diagram of a second pre-compression member and a second sealing member in the fluid on-off control structure according to the present application;
FIG. 6 is a schematic cross-sectional structural diagram of a specific embodiment of the fluid on-off control structure according to the present application;
FIG. 7 is a schematic structural diagram of a target collection groove configured in the fluid on-off control structure according to the present application;
FIG. 8 is a schematic structural diagram of a specific embodiment of a first collection groove and a second collection groove configured in the fluid on-off control structure according to the present application;
FIG. 9 is a front view of a first base and a first sealing member in the fluid on-off control structure according to the present application;
FIG. 10 is a front view of a second base and a second sealing member in the fluid on-off control structure according to the present application;
FIG. 11 is a schematic structural diagram of a target powder discharge port configured in the fluid on-off control structure according to the present application;
FIG. 12 is a schematic structural diagram of a housing, a first diversion connector, and a second diversion connector in the fluid on-off control structure according to the present application;
FIG. 13 is a schematic structural diagram of a first base in the fluid on-off control structure according to the present application;
FIG. 14 is a schematic structural diagram of a second base in the fluid on-off control structure according to the present application;
FIG. 15 is a schematic cross-sectional structural diagram of a specific embodiment of a first sealing ring and a second sealing ring configured in the fluid on-off control structure according to the present application;
FIG. 16 is a schematic side structural diagram of a specific embodiment of the fluid on-off control structure according to the present application;
FIG. 17 is a schematic structural diagram of a buffer assembly configured in the fluid on-off control structure according to the present application;
FIG. 18 is a schematic structural diagram of a plunger base, a plunger main body, a sealing disc, and an elastic member in the fluid on-off control structure according to the present application;
FIG. 19 is a schematic cross-sectional structural diagram of a first specific embodiment of a buffer assembly configured in the fluid on-off control structure according to the present application;
FIG. 20 is a schematic cross-sectional structural diagram of a second specific embodiment of a buffer assembly configured in the fluid on-off control structure according to the present application;
FIG. 21 is a schematic cross-sectional structural diagram of a third specific embodiment of a buffer assembly configured in the fluid on-off control structure according to the present application;
FIG. 22 is a schematic cross-sectional structural diagram of a specific embodiment driven by an electromagnet in the fluid on-off control structure according to the present application;
FIG. 23 is a schematic structural diagram of a quick-connect base configured in the fluid on-off control structure according to the present application;
FIG. 24 is a schematic structural diagram of a connection end of a quick-connect base and a connection end of a cylinder body in the fluid on-off control structure according to the present application;
FIG. 25 is a schematic structural diagram of a quick-connect base in the fluid on-off control structure according to the present application;
FIG. 26 is a schematic structural diagram of a cylinder body in the fluid on-off control structure according to the present application;
FIG. 27 is a front view of a specific embodiment of the fluid on-off control structure according to the present application;
FIG. 28 is a schematic structural diagram of a second embodiment of the fluid on-off control structure according to the present application;
FIG. 29 is a schematic structural diagram of a third embodiment of the fluid on-off control structure according to the present application.

The meanings of the reference numerals are as follows:
target through hole 010, first through hole 011, second through hole 012, piston through hole 020, target collection groove 030, first collection groove 031, first sub-collection groove 0311, second sub-collection groove 0312, second collection groove 032, third sub-collection groove 0321, fourth sub-collection groove 0322, target powder discharge port 040, first powder discharge port 041, first powder discharge groove 0411, second powder discharge groove 0412, second powder discharge port 042, third powder discharge groove 0421, fourth powder discharge groove 0422, piston cavity 050, first piston groove 051, second piston groove 052, third through hole 061, fourth through hole 062, first fixing groove 071, second fixing groove 072, first powder cleaning port 081, second powder cleaning port 082, ventilation port 083, air guide port 084, first connection portion 085, second connection portion 086, base connection hole 087, first connection hole 0871, second connection hole 0872, cylinder connection hole 088, third connection hole 0881, fourth connection hole 0882, sealing device 100, first sealing assembly 110, first pre-compression member 111, first sealing member 112, second sealing assembly 120, second pre-compression member 121, second sealing member 122, driving assembly 200, cylinder body 210, plunger rod body 220, plunger base 221, plunger main body 222, sealing disc 223, first elastic member 230, cylinder body 240, second elastic member 250, electromagnet 260, housing 300, first base 310, second base 320, first diversion connector 401, second diversion connector 402, first sealing ring 501, second sealing ring 502, sealing gasket 503, buffer assembly 600, first buffer member 610, second buffer member 620, third buffer member 630, fourth buffer member 640, and quick-connect base 700.

### DETAILED DESCRIPTION

The technical solutions in the embodiments of the present application are described clearly and completely below in conjunction with the accompanying drawings in the embodiments of the present application. Obviously, the described embodiments are only a part of the embodiments of the present application, rather than all of the embodiments. Based on the embodiments in the present application, all other embodiments obtained by those skilled in the art without creative efforts fall within the scope of protection of the present application.

In the present application, terms such as "upper", "lower", "left", "right", "front", "rear", "top", "bottom", "inner", "outer", "middle", "vertical", "horizontal", "transverse", and "longitudinal" indicate orientations or positional relationships based on those shown in the accompanying drawings. These terms are primarily used to better describe the present application and its embodiments and are not intended to limit the indicated devices, elements, or components to having a specific orientation or being constructed and operated in a specific orientation.

Moreover, some of the above terms may also be used to express other meanings besides orientation or positional relationships. For example, the term "upper" may in some cases be used to indicate a certain dependency or connection relationship. Those of ordinary skill in the art can understand the specific meanings of these terms in the present application based on the specific context.

Furthermore, terms such as "install", "set", "provided with", "connect", and "connected" should be interpreted broadly. For example, a connection may be a fixed connection, a detachable connection, or an integral structure; it may be a mechanical connection or an electrical connection; it may be a direct connection, an indirect connection through an intermediate medium, or an internal connection between two devices, elements, or components. Those of ordinary skill in the art can understand the specific meanings of the above terms in the present application based on the specific context.

Additionally, terms such as "first", "second", etc., are primarily used to distinguish between different devices, elements, or components (which may be of the same or different specific types and structures) and are not intended to indicate or imply the relative importance or quantity of the indicated devices, elements, or components. Unless otherwise specified, "a plurality of" means two or more.

The technical solutions of the present application are further described below in conjunction with the embodiments and the accompanying drawings.

In dentistry, air polishing involves propelling polishing powder (whose main components are usually sodium bicarbonate, glycine, or erythritol) onto the tooth surface using compressed air, combined with a liquid medium (typically water) that is ejected simultaneously with the polishing powder. This process impacts dental plaque and calculus on the tooth surface with certain kinetic energy, thereby achieving the cleaning of the tooth surface.

In practical applications, air polishing dental apparatuses consist of an air polishing main unit and a powder handpiece, which are connected via tubing. After the dental air polishing main unit stops operating, due to the residual air pressure inside the powder handpiece, polishing continues to be ejected, which is not conducive to rapid response control. Therefore, it is necessary to install an on-off control structure between the powder chamber (where compressed air and polishing powder are mixed) and the nozzle (the fluid ejection component) to facilitate quick cutoff of the polishing powder ejection.

In current applications, the on-off control structure provided between the powder chamber and the nozzle is a pinch valve. Its working principle involves a driving mechanism applying thrust to push a pressing rod against a soft tube, thereby compressing and deforming the soft tube to block the internal fluid flow. However, the soft tube is prone to wear and air leakage since the pinch valve controls the on-off state through squeezing force, and the internal fluid contains abrasive particles that frictionally cut the soft tube. This results in deteriorated airtightness and reduced reliability of the air polishing dental apparatus. Therefore, how to improve the airtightness of the fluid on-off control structure, enhance its reliability, and extend its service life has become an urgent problem to be solved.

In view of the above, disclosed in an embodiment of the present application is a fluid on-off control structure and air polishing dental apparatus, which may improve the airtightness of the fluid on-off control structure to achieve rapid response and precise control of the polishing powder fluid, with high reliability and long service life.

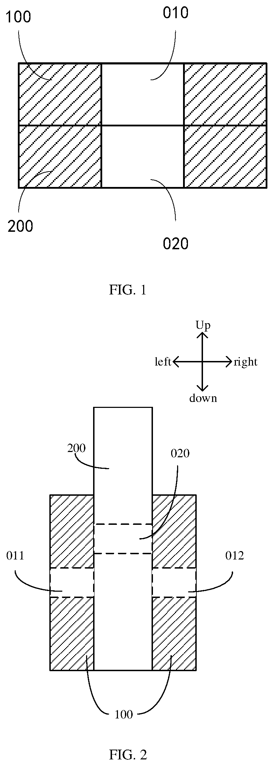

As shown in FIG. 1, disclosed in the present application is a fluid on-off control structure, including a sealing device 100 and a driving assembly 200. The sealing device 100 is provided with a target through hole 010; the driving assembly 200 is provided with a sealing portion, the sealing portion is provided with a piston through hole 020, and at least one surface contact seal is provided between the sealing portion and the sealing device 100; the driving assembly 200 is configured to drive the sealing device 100 and/or the sealing portion to connect or misalign the piston through hole 020 and the target through hole 010.

In the present embodiment, referring to FIG. 1, the sealing device 100 is provided with the target through hole 010, the sealing portion of the driving assembly 200 is provided with the piston through hole 020, and the driving assembly 200 may drive the sealing portion and/or the sealing device 100 to cause relative movement between the sealing portion and the sealing device 100 in the vertical direction, thereby connecting or misaligning the piston through hole 020 and the target through hole 010. The polishing powder fluid may flow through the target through hole 010 and the piston through hole 020 when the piston through hole 020 is aligned and connected with the target through hole 010; the sealing portion may block the flow of the polishing powder fluid when the piston through hole 020 is misaligned with the target through hole 010.

It is evident that the fluid on-off control structure of the present application may control the movement of the sealing device 100 and/or the sealing portion through the driving assembly 200, thereby connecting or disconnecting the target through hole 010 on the sealing device 100 and the piston through hole 020 on the sealing portion. During this process, the sealing device 100 and the sealing portion are less prone to deformation due to external squeezing force, meaning both the sealing device 100 and the sealing portion are less susceptible to wear. This improves the airtightness of the fluid on-off control structure and ensures higher reliability and longer service life.

As shown in FIG. 2, in an optional embodiment, the target through hole 010 includes a first through hole 011 and a second through hole 012; where the driving assembly 200 is configured to drive the sealing device 100 and/or the sealing portion to connect or misalign the piston through hole 020 between the first through hole 011 and the second through hole 012.

In the present embodiment, referring to FIG. 2, the sealing device 100 is provided with a first through hole 011 located on the left side and a second through hole 012 located on the right side in the left and right transverse direction. The sealing portion of the driving assembly 200 is provided with a piston through hole 020, and the sealing portion is disposed between the two through holes on the sealing device 100. The driving assembly 200 may drive the sealing portion and/or the sealing device 100 to cause relative movement between the sealing portion and the sealing device 100 in the vertical direction, thereby connecting or misaligning the piston through hole 020 between the first through hole 011 and the second through hole 012. The polishing powder fluid may flow through the first through hole 011, the piston through hole 020, and the second through hole 012 when the piston through hole 020 is aligned and connected with the first through hole 011 and the second through hole 012 respectively; the sealing portion may block the connection between the first through hole 011 and the second through hole 012 when the piston through hole 020 is misaligned with the first through hole 011 and the second through hole 012, thereby blocking the flow of the polishing powder fluid.

It is evident that this optional embodiment may also control the movement of the sealing device 100 and/or the sealing portion through the driving assembly 200, thereby connecting or disconnecting the first through hole 011 and the second through hole 012 on the sealing device 100. During this process, the sealing device 100 and the sealing portion are less prone to deformation due to external squeezing force, meaning both the sealing device 100 and the sealing portion are less susceptible to wear. This improves the airtightness of the fluid on-off control structure.

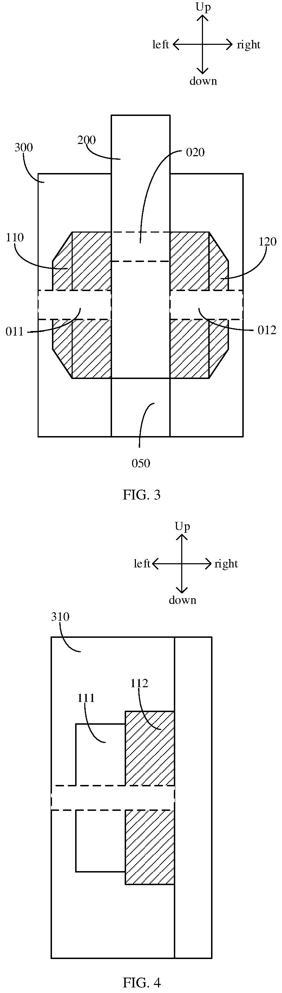

As shown in FIG. 3, in an optional embodiment, the fluid on-off control structure further includes a housing 300, and the housing 300 is provided with a piston cavity 050; the sealing device 100 includes a first sealing assembly 110 and a second sealing assembly 120, the first sealing assembly 110 is disposed on a first inner surface of the piston cavity 050, the first sealing assembly 110 has a pre-compression portion, the pre-compression portion of the first sealing assembly 110 applies a preload force to a sealing surface of the first sealing assembly 110, and the first sealing assembly 110 is provided with a first through hole 011; the second sealing assembly 120 is disposed on a second inner surface of the piston cavity 050, the second sealing assembly 120 has a pre-compression portion, the pre-compression portion of the second sealing assembly 120 applies a preload force to a sealing surface of the second sealing assembly 120, and the second sealing assembly 120 is provided with a second through hole 012; where the first inner surface and the second inner surface are two opposite inner surfaces of the piston cavity 050, the sealing surface of the first sealing assembly 110 and the sealing surface of the second sealing assembly 120 are oppositely disposed, and the first through hole 011 and the second through hole 012 are oppositely disposed; where the sealing portion of the driving assembly 200 is in contact with the sealing surface of the first sealing assembly 110 and the sealing surface of the second sealing assembly 120, respectively, and the sealing portion of the driving assembly 200 is configured to move in the piston cavity 050 to communicate the first through hole 011 and the second through hole 012 through the piston through hole 020, or to block the communication between the first through hole 011 and the second through hole 012 by the sealing portion.

In this optional embodiment, referring to FIG. 3, the housing 300 is provided with a vertical piston cavity 050 in the up-down direction, and both the upper end and the lower end of the piston cavity 050 are in communication with the outside of the housing 300. The inner walls on the left and right sides of the housing 300 are the first inner surface and the second inner surface of the piston cavity 050, respectively, meaning the first inner surface and the second inner surface of the piston cavity 050 are two opposite inner surfaces on the left and right sides of the piston cavity 050.

The first sealing assembly 110 is disposed on the first inner surface of the piston cavity 050, the pre-compression portion of the first sealing assembly 110 is located on the left side of the first sealing assembly 110, and the sealing surface of the first sealing assembly 110 is the right surface of the first sealing assembly 110. The second sealing assembly 120 is disposed on the second inner surface of the piston cavity 050, the pre-compression portion of the second sealing assembly 120 is located on the right side of the second sealing assembly 120, and the sealing surface of the second sealing assembly 120 is the left surface of the second sealing assembly 120. The first through hole 011 of the first sealing assembly 110 and the second through hole 012 of the second sealing assembly 120 are correspondingly disposed in the left-right transverse direction.

In some implementations, the sealing portion of the driving assembly 200 is provided with a piston through hole 020 arranged horizontally in the left-right direction. The internal shape of the piston cavity 050 is determined by the shape of the sealing portion, meaning the internal shape of the piston cavity 050 should conform to the shape of the sealing portion to allow the sealing portion to move vertically within the piston cavity 050 while maintaining contact with the sealing surface of the first sealing assembly 110 and the sealing surface of the second sealing assembly 120 during movement. When the sealing portion of the driving assembly 200 moves vertically within the piston cavity 050, if the piston through hole 020 on the sealing portion is aligned and connected with the first through hole 011 and the second through hole 012, the first through hole 011 and the second through hole 012 may be in communication through the piston through hole 020, allowing fluid to flow through the first through hole 011, the piston through hole 020, and the second through hole 012. If the piston through hole 020 on the sealing portion is not aligned with the first through hole 011 and the second through hole 012, the sealing portion may block the communication between the first through hole 011 and the second through hole 012.

In some implementations, the first sealing assembly 110, through the arrangement of its pre-compression portion toward the first inner surface of the piston cavity 050, enables the sealing surface of the first sealing assembly 110 to receive a preload force directed to the right. Simultaneously, the second sealing assembly 120, through the arrangement of its pre-compression portion toward the second inner surface of the piston cavity 050, enables the sealing surface of the second sealing assembly 120 to receive a preload force directed to the left. Since the sealing portion of the driving assembly 200 is in contact with both the sealing surface of the first sealing assembly 110 and the sealing surface of the second sealing assembly 120, the first sealing assembly 110 and the second sealing assembly 120 may apply pressure toward the sealing portion of the driving assembly 200 in the middle. In summary, regardless of whether the driving assembly 200 is in motion, the first sealing assembly 110 and the second sealing assembly 120 may be pre-compressed against the sealing portion of the driving assembly 200, ensuring a seal between the first sealing assembly 110 and the sealing portion and between the second sealing assembly 120 and the sealing portion. This enhances the airtightness of the fluid on-off control structure.

It is evident that this optional embodiment further utilizes the pre-compression portions of the first sealing assembly 110 and the second sealing assembly 120 to apply pressure toward the sealing portion, ensuring a seal between the first sealing assembly 110 and the sealing portion and between the second sealing assembly 120 and the sealing portion. This improves the airtightness of the fluid on-off control structure, thereby ensuring precise control over the initiation and cessation of the polishing powder ejection.

As shown in FIG. 4, in an optional embodiment, the first sealing assembly 110 includes a first pre-compression member 111 and a first sealing member 112. The first pre-compression member 111 is disposed on the first inner surface of the piston cavity 050, and the first pre-compression member 111 is provided with a first sub-through hole; the first sealing member 112 is disposed on a side of the first pre-compression member 111 away from the first inner surface of the piston cavity 050, and the first sealing member 112 is provided with a second sub-through hole; where the first sub-through hole and the second sub-through hole are oppositely disposed, the first sub-through hole and the second sub-through hole are in communication to form the first through hole 011, the sealing surface of the first sealing assembly 110 is the sealing surface of the first sealing member 112, and the sealing surface of the first sealing member 112 is a surface of the first sealing member 112 away from the first pre-compression member 111.

In this optional embodiment, referring to FIGS. 3 and 4, the first pre-compression member 111 and the first sealing member 112 are sequentially disposed on the first inner surface of the piston cavity 050. The first pre-compression member 111, constrained by the first inner surface, possesses an expansion potential toward the first sealing member 112, enabling the first sealing member 112 to receive a preload force from the first pre-compression member 111. This allows the first sealing member 112 to apply pressure to the sealing portion of the driving assembly 200, thereby achieving a seal between the first sealing member 112 and the sealing portion.

In some implementations, the first sub-through hole of the first pre-compression member 111 and the second sub-through hole of the first sealing member 112 are correspondingly disposed and communicated with each other, and the communicated first sub-through hole and second sub-through hole form the aforementioned first through hole 011. The sealing surface of the first sealing member 112 is located on the right side of the first sealing member 112, and the first sealing member 112 contacts the sealing portion of the driving assembly 200 through its sealing surface.

It is evident that this optional embodiment further utilizes the first pre-compression member 111 to apply a preload force to the first sealing member 112, enabling the first sealing member 112 to apply pressure to the sealing portion of the driving assembly 200. This achieves a seal between the first sealing member 112 and the sealing portion, thereby improving the airtightness of the fluid on-off control structure.

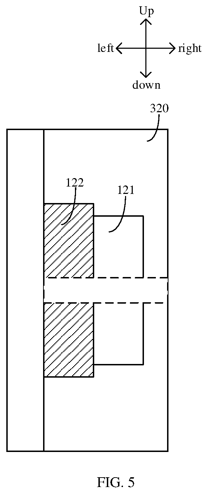

As shown in FIG. 5, in an optional embodiment, the second sealing assembly 120 includes a second pre-compression member 121 and a second sealing member 122. The second pre-compression member 121 is disposed on the second inner surface of the piston cavity 050, and the second pre-compression member 121 is provided with a third sub-through hole; the second sealing member 122 is disposed on a side of the second pre-compression member 121 away from the second inner surface of the piston cavity 050, and the second sealing member 122 is provided with a fourth sub-through hole; where the third sub-through hole and the fourth sub-through hole are oppositely disposed, the third sub-through hole and the fourth sub-through hole are in communication to form the second through hole 012, the sealing surface of the second sealing member 122 is a surface of the second sealing member 122 away from the second pre-compression member 121, and the sealing surface of the second sealing member 122 is oppositely disposed to the sealing surface of the first sealing member 112.

In this optional embodiment, referring to FIGS. 2 and 5, the second pre-compression member 121 and the second sealing member 122 are sequentially disposed on the second inner surface of the piston cavity 050. The second pre-compression member 121, constrained by the second inner surface, possesses an expansion potential toward the second sealing member 122, enabling the second sealing member 122 to receive a preload force from the second pre-compression member 121. This allows the second sealing member 122 to apply pressure to the sealing portion of the driving assembly 200, thereby achieving a seal between the second sealing member 122 and the sealing portion.

In some implementations, the third sub-through hole of the second pre-compression member 121 and the fourth sub-through hole of the second sealing member 122 are correspondingly disposed and communicated with each other, and the communicated third sub-through hole and fourth sub-through hole form the aforementioned second through hole 012. The sealing surface of the second sealing member 122 is located on the left side of the second sealing member 122, meaning the sealing surface of the second sealing member 122 is oppositely disposed to the sealing surface of the first sealing member 112. The second sealing member 122 contacts the sealing portion of the driving assembly 200 through its sealing surface.

It is evident that this optional embodiment further utilizes the second pre-compression member 121 to apply a preload force to the second sealing member 122, enabling the second sealing member 122 to apply pressure to the sealing portion of the driving assembly 200. This achieves a seal between the second sealing member 122 and the sealing portion, thereby improving the airtightness of the fluid on-off control structure.

In an optional embodiment, the constituent material of the first pre-compression member 111 and the constituent material of the second pre-compression member 121 are soft materials or elastic materials, respectively.

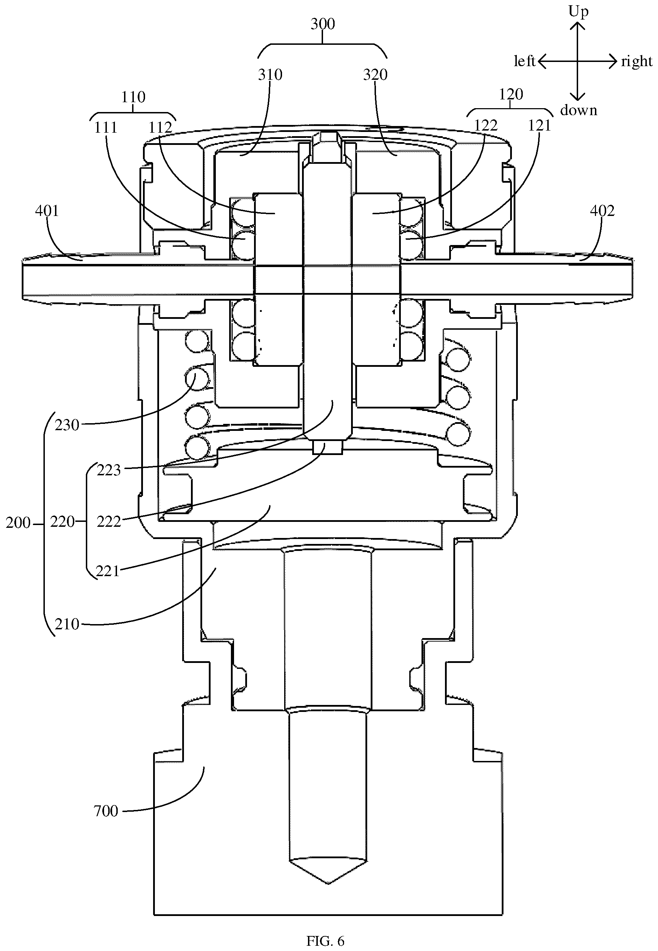

In this optional embodiment, referring to FIG. 6, both the first pre-compression member 111 and the second pre-compression member 121 may be selected as hollow annular gaskets made of soft material or elastic material. The hollow central portion of the annular gasket constitutes the first sub-through hole of the first pre-compression member 111 or the third sub-through hole of the second pre-compression member 121. Since soft materials or elastic materials possess expansion potential under compression, they may enhance the preload force applied to the first sealing member 112 or the second sealing member 122. This increases the pressure exerted on the sealing portion of the driving assembly 200, ensuring the sealing integrity between the first sealing member 112 and the second sealing member 122 and the sealing portion.

It is evident that this optional embodiment further improves the airtightness of the fluid on-off control structure by using soft materials or elastic materials as the constituent materials for the first pre-compression member 111 and the second pre-compression member 121.

As shown in FIGS. 6, 13, and 14, in an optional embodiment, the first inner surface of the piston cavity 050 is provided with a first fixing groove 071, and the second inner surface of the piston cavity 050 is provided with a second fixing groove 072; where the first sealing assembly 110 is disposed in the first fixing groove 071, and the second sealing assembly 120 is disposed in the second fixing groove 072.

In this optional embodiment, the first inner surface is provided with the first fixing groove 071, and the second inner surface is provided with the second fixing groove 072. The first sealing assembly 110 is disposed in the first fixing groove 071 on the first inner surface, meaning the first fixing groove 071 may secure the first sealing assembly 110; the second sealing assembly 120 is disposed in the second fixing groove 072 on the second inner surface, meaning the second fixing groove 072 may secure the second sealing assembly 120.

It is evident that this optional embodiment further secures the first sealing assembly 110 through the first fixing groove 071 on the first inner surface and secures the second sealing assembly 120 through the second fixing groove 072 on the second inner surface. This ensures that during vertical movement of the sealing portion of the driving assembly 200, the first sealing assembly 110 and the second sealing assembly 120 remain constrained from displacement due to their fixed positions, thereby ensuring the reliability of the fluid on-off control structure.

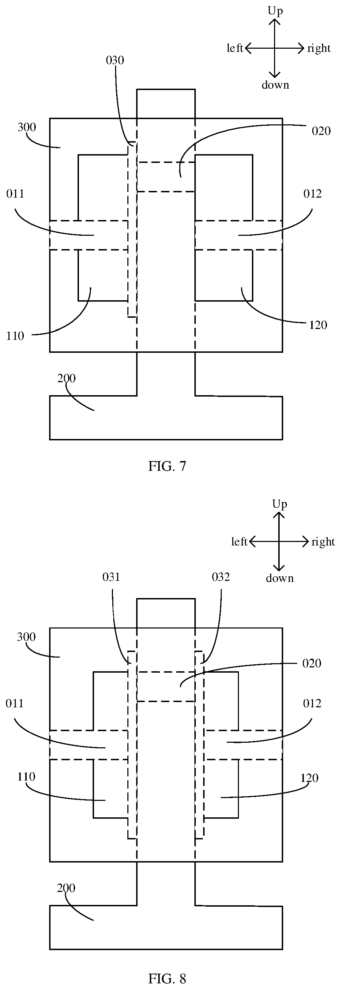

As shown in FIG. 7, in an optional embodiment, an inner wall of the piston cavity 050 of the housing 300 is provided with a target collection groove 030. The first through hole 011 and the second through hole 012 are respectively in communication with an external air polishing diversion pipe body. The air polishing diversion pipe body is configured to convey a polishing powder fluid. The target collection groove 030 is configured to collect residual powder of the polishing powder fluid in the piston cavity 050.

In this optional embodiment, the first through hole 011 of the first sealing assembly 110 and the second through hole 012 of the second sealing assembly 120 are both connected to the external air polishing diversion pipe body. The air polishing diversion pipe body conveys the polishing powder fluid intended for air polishing dental work. The air polishing diversion pipe body includes a front section and a rear section: the front section delivers the polishing powder fluid to the fluid on-off control structure, while the rear section delivers the polishing powder to the nozzle of the air polishing dental apparatus. The front and rear sections of the air polishing diversion pipe body are respectively connected to corresponding through holes. It should be understood that the flow direction of the polishing powder fluid within the fluid on-off control structure depends on how the front and rear sections are connected to the first through hole 011 and the second through hole 012. The connection method may be adaptively configured based on the actual required flow direction of the polishing powder fluid.

The target collection groove 030 is formed on the inner wall of the piston cavity 050 of the housing 300 and in communication with the piston cavity 050. The sealing portion of the driving assembly 200 pushes residual powder of the polishing powder fluid between the sealing portion and the inner wall of the piston cavity 050 into the target collection groove 030 when the sealing portion of the driving assembly 200 moves vertically within the piston cavity 050,. Thus, the target collection groove 030 collects the residual powder, reducing friction between the sealing portion and the sealing surfaces of the first sealing assembly 110 and the second sealing assembly 120. This minimizes the impact of polishing powder residue on the movement of the sealing portion within the piston cavity 050, thereby improving the precision of controlling the on-off state of the polishing powder fluid.

It is evident that this optional embodiment further utilizes the target collection groove 030 on the inner wall of the piston cavity 050. During radial movement of the sealing portion of the driving assembly 200 within the piston cavity 050, residual powder between the sealing portion and the sealing surfaces of the first sealing assembly 110 and the second sealing assembly 120 is squeezed into the target collection groove 030. By collecting residual powder through the target collection groove 030, the impact of polishing powder on the movement of the sealing portion within the piston cavity 050 is reduced, thereby enhancing the precision of controlling the on-off state of the polishing powder fluid.

As shown in FIG. 8, in an optional embodiment, the target collection groove 030 includes a first collection groove 031 and a second collection groove 032; the first inner surface of the piston cavity 050 is provided with the first collection groove 031, and the second inner surface of the piston cavity 050 is provided with the second collection groove 032; the first collection groove 031 is in communication with the first fixing groove 071, and the second collection groove 032 is in communication with the second fixing groove 072; both the first collection groove 031 and the second collection groove 032 are configured to collect residual powder of the polishing powder fluid in the piston cavity 050.

In this optional embodiment, the first inner surface is provided with the first collection groove 031, and the second inner surface is provided with the second collection groove 032. The first collection groove 031 is in communication with the first fixing groove 071 on the first inner surface, and the second collection groove 032 is in communication with the second fixing groove 072 on the second inner surface.

When the sealing portion of the driving assembly 200 moves vertically within the piston cavity 050, the sealing portion of the driving assembly 200 pushes residual powder of the polishing powder fluid between the sealing portion and the first sealing assembly 110 into the first collection groove 031, and pushes residual powder between the sealing portion and the second sealing assembly 120 into the second collection groove 032. This reduces friction between the sealing portion and the sealing surfaces of the first sealing assembly 110 and the second sealing assembly 120, thereby minimizing the impact of polishing powder residue on the movement of the sealing portion within the piston cavity 050.

It is evident that this optional embodiment further collects residual powder of the polishing powder fluid through the first collection groove 031 and the second collection groove 032. This reduces friction between the sealing portion and the sealing surfaces of the first sealing assembly 110 and the second sealing assembly 120, minimizing the impact of polishing powder on the movement of the sealing portion within the piston cavity 050, thereby enhancing the precision of controlling the on-off state of the polishing powder fluid.

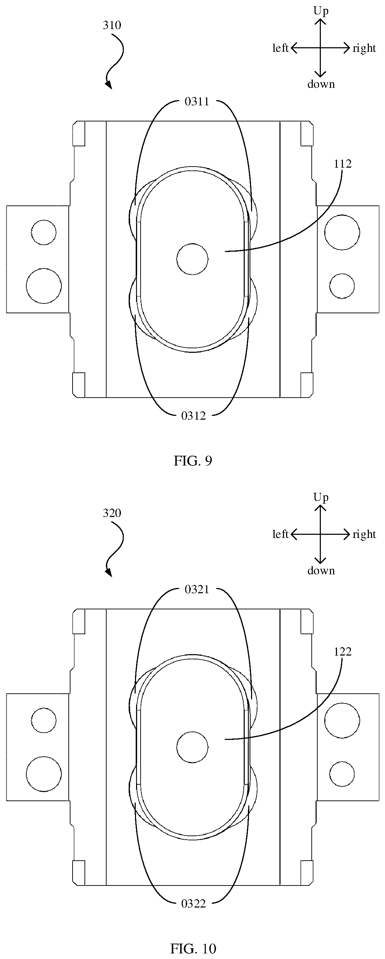

As shown in FIG. 9, in an optional embodiment, the first collection groove 031 includes a first sub-collection groove 0311 and a second sub-collection groove 0312. The first sub-collection groove 0311 is disposed at a first end of the first fixing groove 071, and the second sub-collection groove 0312 is disposed at a second end of the first fixing groove 071. The first end and the second end of the first fixing groove 071 are two opposite ends of the first fixing groove 071 in a radial direction of the piston cavity 050.

In this optional embodiment, referring to FIG. 9, the upper end of the first fixing groove 071 is provided with the first sub-collection groove 0311, and the lower end of the first fixing groove 071 is provided with the second sub-collection groove 0312. Both the first sub-collection groove 0311 and the second sub-collection groove 0312 are in communication with the first fixing groove 071. It should be understood that the size and shape of the first sub-collection groove 0311 and the second sub-collection groove 0312 may be configured according to actual requirements for collecting residual powder. As shown in FIG. 9, both the first sub-collection groove 0311 and the second sub-collection groove 0312 may be horizontally arranged oval grooves.

When the first sealing member 112 is disposed in the first fixing groove 071, the first sub-collection groove 0311 at the upper end is divided into a left groove and a right groove, and the second sub-collection groove 0312 at the lower end is similarly divided into a left groove and a right groove. The sealing portion of the driving assembly 200 pushes residual powder of the polishing powder fluid between the sealing portion and the first inner surface of the piston cavity 050 into the first sub-collection groove 0311 at the upper end when the sealing portion of the driving assembly 200 moves upward relative to the housing 300 within the piston cavity 050. The sealing portion of the driving assembly 200 pushes residual powder between the sealing portion and the first inner surface of the piston cavity 050 into the second sub-collection groove 0312 at the lower end when the sealing portion moves downward relative to the housing 300 within the piston cavity 050, .

Simultaneously, by providing the first sub-collection groove 0311 and the second sub-collection groove 0312, the contact area between the first sealing member 112 and the inner wall of the first fixing groove 071 is reduced. This decreases the friction between the first sealing member 112 and the inner wall of the first fixing groove 071, allowing the first sealing member 112 to move smoothly in the radial direction of the first fixing groove 071 and facilitating disassembly, maintenance, and servicing of the first sealing member 112.

It is evident that this optional embodiment further utilizes the first sub-collection groove 0311 and the second sub-collection groove 0312 to collect residual powder of the polishing powder fluid between the sealing portion and the first sealing member 112, thereby reducing the impact of the polishing powder on the movement of the sealing portion of the driving assembly 200 within the piston cavity 050 and improving the precision of controlling the on-off state of the polishing powder fluid. Simultaneously, by providing the first sub-collection groove 0311 and the second sub-collection groove 0312, the friction between the first sealing member 112 and the inner wall of the first fixing groove 071 is reduced. This allows the first sealing member 112 to move smoothly in the radial direction of the first fixing groove 071 and facilitates disassembly, maintenance, and servicing of the first sealing member 112.

As shown in FIG. 10, in an optional embodiment, the second collection groove 032 includes a third sub-collection groove 0321 and a fourth sub-collection groove 0322. The third sub-collection groove 0321 is disposed at a first end of the second fixing groove 072, and the fourth sub-collection groove 0322 is disposed at a second end of the second fixing groove 072. The first end and the second end of the second fixing groove 072 are two opposite ends of the second fixing groove 072 in the radial direction of the piston cavity 050.

In this optional embodiment, referring to FIG. 10, the upper end of the second fixing groove 072 is provided with the third sub-collection groove 0321, and the lower end of the second fixing groove 072 is provided with the fourth sub-collection groove 0322. Both the third sub-collection groove 0321 and the fourth sub-collection groove 0322 are in communication with the second fixing groove 072. It should be understood that the size and shape of the third sub-collection groove 0321 and the fourth sub-collection groove 0322 may be configured according to actual requirements for collecting residual powder. As shown in FIG. 10, both the third sub-collection groove 0321 and the fourth sub-collection groove 0322 may be horizontally arranged oval grooves.

When the second sealing member 122 is disposed in the second fixing groove 072, the third sub-collection groove 0321 at the upper end is divided into a left groove and a right groove, and the fourth sub-collection groove 0322 at the lower end is similarly divided into a left groove and a right groove. The sealing portion of the driving assembly 200 pushes residual powder of the polishing powder fluid between the sealing portion and the second inner surface of the piston cavity 050 into the third sub-collection groove 0321 at the upper end when the sealing portion of the driving assembly 200 moves upward relative to the housing 300 within the piston cavity 050. The sealing portion of the driving assembly 200 pushes residual powder between the sealing portion and the second inner surface of the piston cavity 050 into the fourth sub-collection groove 0322 at the lower end when the sealing portion of the driving assembly 200 moves downward relative to the housing 300 within the piston cavity 050.

Simultaneously, by providing the third sub-collection groove 0321 and the fourth sub-collection groove 0322, the contact area between the second sealing member 122 and the inner wall of the second fixing groove 072 is reduced. This decreases the friction between the second sealing member 122 and the inner wall of the second fixing groove 072, allowing the second sealing member 122 to move smoothly in the radial direction of the second fixing groove 072 and facilitating disassembly, maintenance, and servicing of the second sealing member 122.

It is evident that this optional embodiment further utilizes the third sub-collection groove 0321 and the fourth sub-collection groove 0322 to collect residual powder of the polishing powder fluid between the sealing portion and the second sealing member 122, thereby reducing the impact of the polishing powder on the movement of the sealing portion of the driving assembly 200 within the piston cavity 050 and improving the precision of controlling the on-off state of the polishing powder fluid. Simultaneously, by providing the third sub-collection groove 0321 and the fourth sub-collection groove 0322, the friction between the second sealing member 122 and the inner wall of the second fixing groove 072 is reduced. This allows the second sealing member 122 to move smoothly in the radial direction of the second fixing groove 072 and facilitates disassembly, maintenance, and servicing of the second sealing member 122.

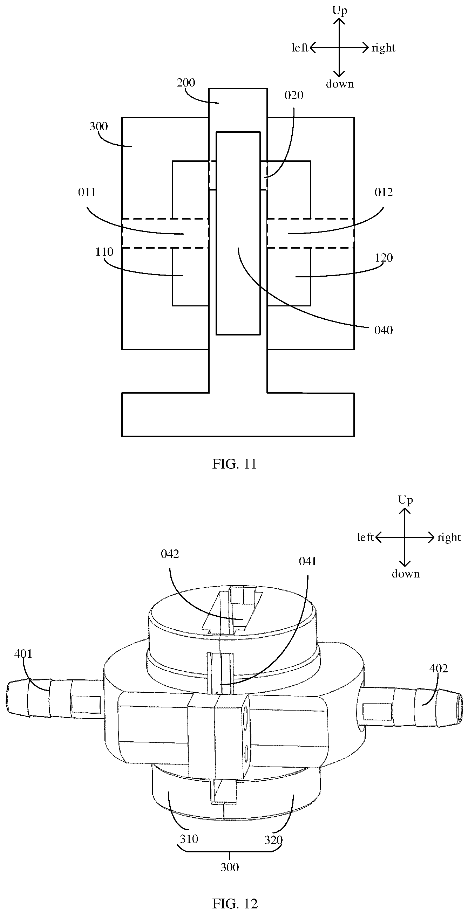

As shown in FIG. 11, in an optional embodiment, the housing 300 is provided with a target powder discharge port 040 in the radial direction of the piston cavity 050. The target powder discharge port 040 is in communication with the piston cavity 050, and the target powder discharge port 040 is configured to provide a discharge channel for residual powder of the polishing powder fluid in the piston cavity 050 to be discharged to an outside of the housing 300.

In this optional embodiment, referring to FIG. 11, an outer wall of the housing 300 is provided with the target powder discharge port 040 vertically. This target powder discharge port 040 is in communication with the piston cavity 050. Since the sealing portion of the driving assembly 200 moves vertically within the piston cavity 050, and the target powder discharge port 040 is arranged along the movement trajectory of the sealing portion, when the sealing portion moves within the piston cavity 050, the sealing portion moves within the piston cavity 050 pushes residual powder of the polishing powder fluid between the sealing portion and the inner wall of the piston cavity 050 into the target powder discharge port 040. This allows the residual powder to be discharged from the piston cavity 050 through the target powder discharge port 040, thereby reducing the impact of the polishing powder on the movement of the sealing portion within the piston cavity 050 and preventing the sealing portion of the driving assembly 200 from becoming stuck in the piston cavity 050. This enhances the reliability of the fluid on-off structure.

It is evident that this optional embodiment further utilizes the target powder discharge port 040 provided along the radial direction of the piston cavity 050 in the housing 300. During radial movement of the sealing portion of the driving assembly 200 within the piston cavity 050, residual powder between the sealing portion and the inner wall of the piston cavity 050 is discharged through the target powder discharge port 040. This reduces the impact of the polishing powder on the movement of the sealing portion within the piston cavity 050, thereby improving the reliability of the fluid on-off structure.

As shown in FIG. 12, in an optional embodiment, the target powder discharge port 040 includes a first powder discharge port 041 and a second powder discharge port 042; the housing 300 is provided with the first powder discharge port 041 and the second powder discharge port 042 in the radial direction of the piston cavity 050, the first powder discharge port 041 and the second powder discharge port 042 are oppositely disposed, both the first powder discharge port 041 and the second powder discharge port 042 are in communication with the piston cavity 050, and both the first powder discharge port 041 and the second powder discharge port 042 are configured to discharge residual powder of the polishing powder fluid in the piston cavity 050 to an outside of the housing 300.

In this optional embodiment, referring to FIG. 12, the housing 300 is provided with the first powder discharge port 041 and the second powder discharge port 042 vertically along its outer wall. Both the first powder discharge port 041 and the second powder discharge port 042 are in communication with the piston cavity 050 inside the housing 300, and the first powder discharge port 041 and the second powder discharge port 042 are oppositely disposed with the central axis of the piston cavity 050 as the symmetry center.

Since the sealing portion of the driving assembly 200 moves vertically within the piston cavity 050, and the first powder discharge port 041 and the second powder discharge port 042 are arranged along the movement trajectory of the sealing portion, when the sealing portion of the driving assembly 200 moves within the piston cavity 050, the sealing portion of the driving assembly 200 pushes residual powder of the polishing powder fluid between the sealing portion and the inner wall of the piston cavity 050 into the first powder discharge port 041 and the second powder discharge port 042. This allows the residual powder to be discharged from the piston cavity 050 through the first powder discharge port 041 and the second powder discharge port 042, thereby reducing the impact of the polishing powder on the movement of the sealing portion within the piston cavity 050 and preventing the sealing portion of the driving assembly 200 from becoming stuck in the piston cavity 050. This further enhances the reliability of the fluid on-off structure. It should be understood that both the first powder discharge port 041 and the second powder discharge port 042 may be configured as rectangular or rounded openings with their long sides vertically oriented. While ensuring that the first powder discharge port 041 and the second powder discharge port 042 are arranged along the movement trajectory of the sealing portion within the piston cavity 050, the shapes of the first powder discharge port 041 and the second powder discharge port 042 may be adaptively adjusted according to actual requirements.

It is evident that this optional embodiment further utilizes the first powder discharge port 041 and the second powder discharge port 042 provided along the radial direction of the piston cavity 050 in the housing 300. During radial movement of the sealing portion of the driving assembly 200 within the piston cavity 050, residual powder between the sealing portion and the inner wall of the piston cavity 050 is discharged through the first powder discharge port 041 and the second powder discharge port 042. This reduces the impact of the polishing powder on the movement of the sealing portion within the piston cavity 050, thereby improving the reliability of the fluid on-off structure.

As shown in FIG. 12, in an optional embodiment, the housing 300 includes a first base 310 and a second base 320. The first base 310 is provided with a third through hole 061, a connection side of the first base 310 is provided with a first piston groove 051, an inner surface of the first piston groove 051 is provided with a first fixing groove 071 and a first collection groove 031, a first end of the first piston groove 051 is provided with a first powder discharge groove 0411, a second end of the first piston groove 051 is provided with a second powder discharge groove 0412, and the third through hole 061 is in communication with the first fixing groove 071; the first sealing assembly 110 is disposed in the first fixing groove 071, and the first through hole 011 of the first sealing assembly 110 and the third through hole 061 of the first base 310 are oppositely disposed; the second base 320 is provided with a fourth through hole 062, a connection side of the second base 320 is provided with a second piston groove 052, an inner surface of the second piston groove 052 is provided with a second fixing groove 072 and a second collection groove 032, a first end of the second piston groove 052 is provided with a third powder discharge groove 0421, a second end of the second piston groove 052 is provided with a fourth powder discharge groove 0422, and the fourth through hole 062 is in communication with the second fixing groove 072; the second sealing assembly 120 is disposed in the second fixing groove 072, and the second through hole 012 of the first sealing assembly 110 and the fourth through hole 062 of the second base 320 are oppositely disposed; where the first end and the second end of the first piston groove 051 are two opposite ends of the first piston groove 051, and the first end and the second end of the second piston groove 052 are two opposite ends of the second piston groove 052; the connection side of the first base 310 and the connection side of the second base 320 are oppositely disposed, and the connection side of the first base 310 is connected to the connection side of the second base 320, so that the first piston groove 051 and the second piston groove 052 form the piston cavity 050, the first powder discharge groove 0411 and the third powder discharge groove 0421 form the first powder discharge port 041, and the second powder discharge groove 0412 and the fourth powder discharge groove 0422 form the second powder discharge port 042.

In this optional embodiment, referring to FIG. 12, the housing 300 may be divided into a first base 310 on the left side and a second base 320 on the right side. The connection side of the first base 310 is located on the right surface of the first base 310, and the connection side of the second base 320 is located on the left surface of the second base 320.

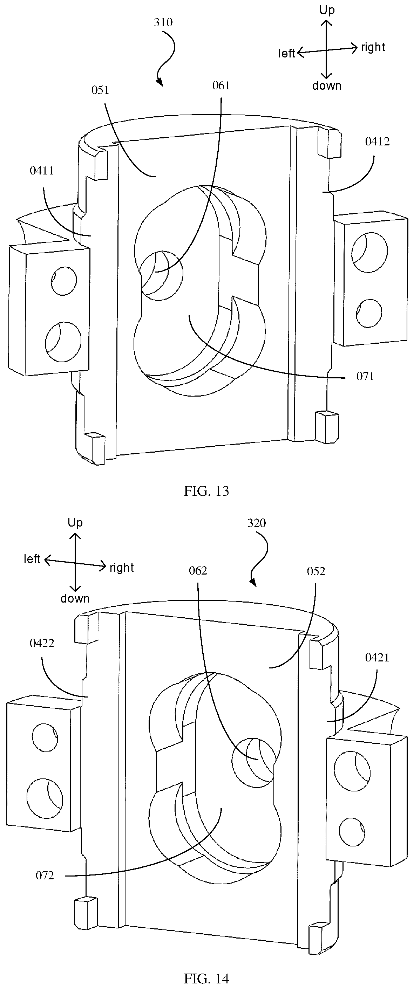

Referring to FIG. 13, the connection side of the first base 310 is provided with a first piston groove 051. The left and right ends of the first piston groove 051 are respectively provided with a first powder discharge groove 0411 and a second powder discharge groove 0412. The inner surface of the first piston groove 051 is the aforementioned first inner surface of the piston cavity 050. Simultaneously referring to FIG. 6, the inner surface of the first piston groove 051 is provided with a first fixing groove 071. The first pre-compression member 111 and the first sealing member 112 are sequentially disposed in this first fixing groove 071, enabling the first fixing groove 071 to secure the first pre-compression member 111 and the first sealing member 112.

Referring to FIG. 14, the connection side of the second base 320 is provided with a second piston groove 052. The left and right ends of the second piston groove 052 are respectively provided with a third powder discharge groove 0421 and a fourth powder discharge groove 0422. The inner surface of the second piston groove 052 is the aforementioned second inner surface of the piston cavity 050. Simultaneously referring to FIG. 6, the inner surface of the second piston groove 052 is provided with a second fixing groove 072. The second pre-compression member 121 and the second sealing member 122 are sequentially disposed in this second fixing groove 072, enabling the second fixing groove 072 to secure the second pre-compression member 121 and the second sealing member 122.

Referring to FIG. 12, the connection side of the first base 310 is connected to the connection side of the second base 320, causing the first piston groove 051 of the first base 310 and the second piston groove 052 of the second base 320 to enclose and form the aforementioned piston cavity 050. This connection also causes the first powder discharge groove 0411 of the first base 310 and the third powder discharge groove 0421 of the second base 320 to enclose and form the aforementioned first powder discharge port 041, and the second powder discharge groove 0412 of the first base 310 and the fourth powder discharge groove 0422 of the second base 320 to enclose and form the aforementioned second powder discharge port 042. It should be understood that the shapes of the first piston groove 051 and the second piston groove 052 may refer to the description of the internal shape of the piston cavity 050, meaning the shapes of the first piston groove 051 and the second piston groove 052 are determined by the shape of the sealing portion of the driving assembly 200.

In some implementations, referring to FIG. 13, the first base 310 is further provided with a third through hole 061. The third through hole 061 of the first base 310 is oppositely disposed and in communication with both the first sub-through hole of the first pre-compression member 111 and the second sub-through hole of the first sealing member 112. Referring to FIG. 14, the second base 320 is further provided with a fourth through hole 062. The fourth through hole 062 of the second base 320 is oppositely disposed and in communication with both the third sub-through hole of the second pre-compression member 121 and the fourth sub-through hole of the second sealing member 122.

Referring to FIG. 9, the inner surface of the first piston groove 051 of the first base 310 is further provided with the first sub-collection groove 0311 and the second sub-collection groove 0312 described in the above embodiments. Referring to FIG. 10, the inner surface of the second piston groove 052 of the second base 320 is further provided with the third sub-collection groove 0321 and the fourth sub-collection groove 0322 described in the above embodiments. It should be understood that care should be taken to ensure that the swing angle of the first sealing member 112 in the radial direction of the first fixing groove 071 is less than or equal to 5 degrees when configuring the first sub-collection groove 0311, second sub-collection groove 0312, third sub-collection groove 0321, and fourth sub-collection groove 0322. This guarantees the positional accuracy between the center of the first through hole 011 of the first sealing member 112 and the center of the third through hole 061 of the first base 310. Similarly, the swing angle of the second sealing member 122 in the radial direction of the second fixing groove 072 should be less than or equal to 5 degrees to ensure positional accuracy between the center of the second through hole 012 of the second sealing member 122 and the center of the fourth through hole 062 of the second base 320.

As shown in FIG. 6, in an optional embodiment, the fluid on-off control structure further includes a first diversion connector 401 and a second diversion connector 402. The first diversion connector 401 is disposed at the third through hole 061 of the first base 310, and interfaces of the first diversion connector 401 are respectively in communication with the third through hole 061 of the first base 310 and the first through hole 011 of the first sealing assembly 110. The second diversion connector 402 is disposed at the fourth through hole 062 of the second base 320, and interfaces of the second diversion connector 402 are respectively in communication with the fourth through hole 062 of the second base 320 and the second through hole 012 of the second sealing assembly 120.

In this optional embodiment, the first diversion connector 401 is connected to the third through hole 061 of the first base 310, so that interfaces of the first diversion connector 401 are respectively in communication with the third through hole 061 of the first base 310, the first sub-through hole of the first pre-compression member 111, and the second sub-through hole of the first sealing member 112. The second diversion connector 402 is connected to the fourth through hole 062 of the second base 320, so that interfaces of the second diversion connector 402 are respectively in communication with the fourth through hole 062 of the second base 320, the third sub-through hole of the second pre-compression member 121, and the fourth sub-through hole of the second sealing member 122. The first diversion connector 401 and the second diversion connector 402 may be connected to an external air polishing diversion pipe body, allowing fluid conveyed by the air polishing diversion pipe body to enter and exit the fluid on-off control structure.

It is evident that this optional embodiment further utilizes the first diversion connector 401 and the second diversion connector 402 to introduce and discharge the air polishing fluid whose flow needs to be controlled, ensuring that the air polishing fluid does not overflow when being delivered to or discharged from the fluid on-off control structure, thereby improving the stability of air polishing fluid conveyance.

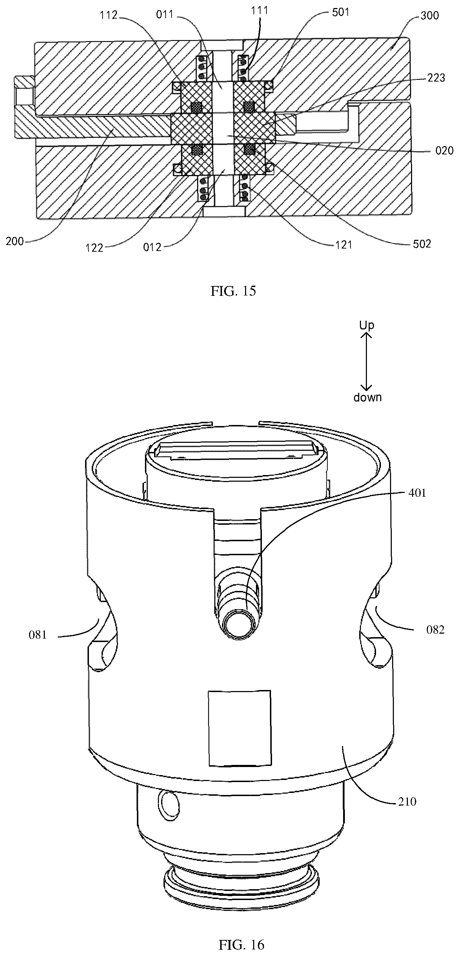

As shown in FIG. 15, in an optional embodiment, a first sealing ring 501 is provided between the housing 300 and a side surface of the first sealing assembly 110 and between the housing 300 and a side surface of the second sealing assembly 120.

In this optional embodiment, referring to FIG. 15, the first sealing ring 501 is provided between the side surface of the first sealing member 112 and the first fixing groove 071 of the housing 300, and between the side surface of the second sealing member 122 and the second fixing groove 072 of the housing 300. The first sealing ring 501 may prevent the polishing powder fluid from flowing into the first fixing groove 071 and the second fixing groove 072 of the housing 300.

As shown in FIG. 15, in an optional embodiment, a second sealing ring 502 for sealing is provided between the sealing portion and the first sealing assembly 110 and between the sealing portion and the second sealing assembly 120.

In this optional embodiment, referring to FIG. 15, a second sealing ring 502 may also be provided between the first sealing member 112 and the sealing portion, and between the second sealing member 122 and the sealing portion. The central portion of this second sealing ring 502 is designed with a through hole. Grooves for mounting sealing rings may be formed on the sealing surfaces of the first sealing member 112 and the second sealing member 122 facing the central sealing portion. The through hole on the second sealing ring 502 is aligned with the second sub-through hole of the first sealing member 112 and the fourth sub-through hole of the second sealing member 122, respectively, to ensure that the second sealing ring 502 does not block the fluid channels between the second sub-through hole and the fourth sub-through hole and the piston through hole 020. By mounting the second sealing ring 502, the flow of polishing powder fluid into the gaps between the sealing portion and the first sealing member 112, as well as between the sealing portion and the second sealing member 122, may be effectively reduced. This decreases the friction between the sealing portion of the driving assembly 200 and the sealing surfaces of the first sealing member 112 and the second sealing member 122.

In an optional embodiment, the sealing surfaces of the sealing portion, the first sealing member 112 of the sealing device 100, and the second sealing member 122 have a surface roughness less than Ra 0.2 µm, a material hardness greater than 500 HV, and a contact surface flatness between the sealing device 100 and the sealing portion less than 0.005 mm.

As shown in FIG. 6, in an optional embodiment, the driving assembly 200 includes a cylinder body 210, a plunger rod body 220, and a first elastic member 230. The cylinder body 210 is provided with a cylinder cavity and a ventilation port 083; the sealing portion is disposed on the plunger rod body 220, the plunger rod body 220 is disposed in the cylinder cavity, and the sealing portion of the plunger rod body 220 is in contact with the sealing surface of the first sealing assembly 110 and the sealing surface of the second sealing assembly 120, respectively; the first elastic member 230 is disposed between the plunger rod body 220 and the housing 300 in the cylinder cavity; where the cylinder body 210 is configured to introduce gas into the cylinder cavity through the ventilation port 083, so that the introduced gas acts on the plunger rod body 220 to drive the sealing portion of the plunger rod body 220 to move in the piston cavity 050, thereby communicating the first through hole 011 and the second through hole 012 through the piston through hole 020; and the first elastic member 230 is configured to reset the plunger rod body 220, so that the sealing portion on the plunger rod body 220 blocks the communication between the first through hole 011 and the second through hole 012.

In this optional embodiment, the bottom end of the cylinder body 210 is provided with a ventilation port 083. The interior of the cylinder body 210 is provided with a cylinder cavity with a radial orientation in the vertical direction. The ventilation port 083 is in communication with the cylinder cavity. The plunger rod body 220 is disposed within the cylinder cavity of the cylinder body 210, and the sealing portion of the plunger rod body 220 is located at the upper part of the plunger rod body 220. The air supply device may supply gas to the cylinder cavity inside the cylinder body 210 through the ventilation port 083 of the cylinder body 210 to drive the plunger rod body 220 to move vertically, thereby causing the sealing portion of the plunger rod body 220 to move vertically within the piston cavity 050. A first elastic member 230 is also provided between the plunger rod body 220 and the housing 300. The first elastic member 230 may reset the plunger rod body 220 when the air supply device does not supply gas to the cylinder cavity of the cylinder body 210. Since the sealing portion of the plunger rod body 220 is provided with the piston through hole 020, when the air supply device supplies gas to drive the sealing portion of the plunger rod body 220 to move upward within the piston cavity 050, if the piston through hole 020 on the sealing portion is aligned with the first through hole 011 and the second through hole 012, the first through hole 011 and the second through hole 012 may be in communication through the piston through hole 020, allowing the polishing fluid to flow through the first through hole 011, the piston through hole 020, and the second through hole 012. If the air supply device does not supply gas to the cylinder cavity of the cylinder body 210, the first elastic member 230 resets the plunger rod body 220. At this time, the piston through hole 020 on the sealing portion is misaligned with the first through hole 011 and the second through hole 012, and the non-through-hole portion of the sealing portion may block the communication between the first through hole 011 and the second through hole 012.

It is evident that this optional embodiment further controls the vertical movement of the sealing portion of the plunger rod body 220 within the piston cavity 050 by pressurizing the cylinder cavity through the cylinder body 210 and resetting via the first elastic member 230. This improves the operability and accuracy of controlling the fluid on-off state, thereby enhancing the precision of initiating and ceasing the ejection of the polishing powder.

In an optional embodiment, a design value of a bottom surface area of a sealing end of the plunger rod body 220 increases as an elastic coefficient of the first elastic member 230 increases.

In this optional embodiment, referring to FIG. 6, the sealing end of the plunger rod body 220 is located at the lower portion of the plunger rod body 220. The required design value of the bottom surface area of the sealing end of the plunger rod body 220 is related to the elastic coefficient of the first elastic member 230. When the elastic coefficient of the first elastic member 230 increases, the designed bottom surface area of the sealing end of the plunger rod body 220 increases accordingly. To ensure that the first elastic member 230 has sufficient resilience during the return process to smoothly and accurately reset the plunger rod body 220, it is necessary to increase the elastic coefficient of the first elastic member 230 to enhance the elastic force of the first elastic member 230. At this time, due to the increase in the elastic coefficient of the first elastic member 230, a greater thrust is required from the air supply device during ventilation to enable the plunger rod body 220 to compress the first elastic member 230 upward. Let the thrust received by the sealing end of the plunger rod body 220 be F = P × S, where P is the air pressure in the cylinder cavity of the cylinder body 210, and S is the bottom surface area of the sealing end of the plunger rod body 220. To avoid waste of ventilation gas, P should be a fixed value. To increase F under this condition, the design value of S needs to be increased accordingly, ensuring that the air supply device has sufficient thrust to push the sealing end of the plunger rod body 220 to compress the first elastic member 230.

It is evident that this optional embodiment further allows the design value of the bottom surface area of the sealing end of the plunger rod body 220 to increase as the elastic coefficient of the first elastic member 230 increases. This ensures that the air supply device has sufficient thrust to push the sealing end of the plunger rod body 220 to compress the first elastic member 230, and that the elastic force of the first elastic member 230 may smoothly and accurately reset the plunger rod body 220, thereby improving the accuracy of controlling the on-off state of the polishing powder fluid.

As shown in FIG. 16, in an optional embodiment, the cylinder body 210 is provided with a first powder cleaning port 081 and a second powder cleaning port 082, both of which are in communication with the cylinder cavity.

In this optional embodiment, referring to FIG. 16, an outer wall of the cylinder body 210 is provided with the first powder cleaning port 081 and the second powder cleaning port 082 vertically. Both the first powder cleaning port 081 and the second powder cleaning port 082 are in communication with the cylinder cavity inside the cylinder body 210. The first powder cleaning port 081 is oppositely disposed to the first powder discharge port 041, and the second powder cleaning port 082 is oppositely disposed to the second powder discharge port 042. This allows residual powder discharged from the first powder discharge port 041 to be cleaned through the first powder cleaning port 081, and residual powder discharged from the second powder discharge port 042 to be cleaned through the second powder cleaning port 082. Thus, cleaning tasks may be conveniently performed without the need to disassemble the cylinder body 210. It should be understood that the shapes of the first powder cleaning port 081 and the second powder cleaning port 082 may be adaptively adjusted according to actual cleaning requirements. For example, both the first powder cleaning port 081 and the second powder cleaning port 082 may be configured as horizontally arranged rounded openings.

It is evident that this optional embodiment further utilizes the first powder cleaning port 081 and the second powder cleaning port 082 to clean residual powder discharged from the first powder discharge port 041 and the second powder discharge port 042, eliminating the need to disassemble the cylinder body 210. This enhances the convenience of cleaning the fluid on-off structure.

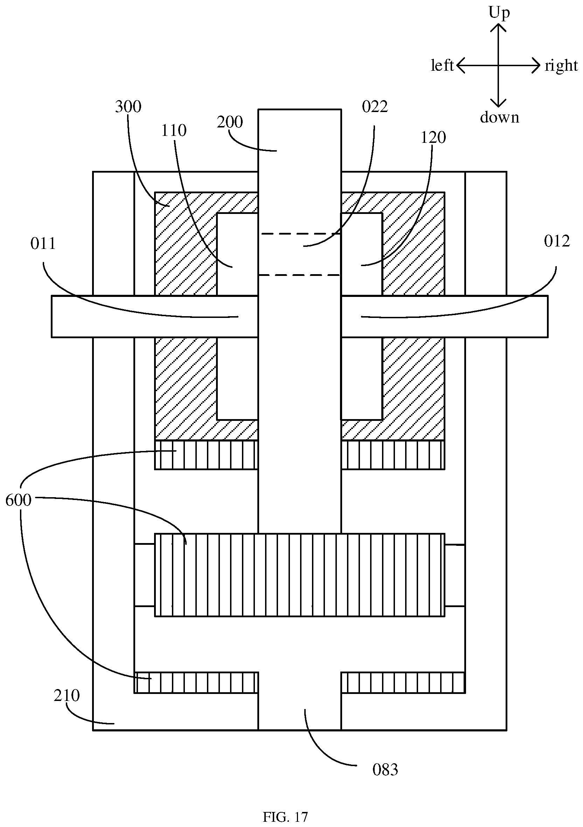

As shown in FIG. 17, in an optional embodiment, the fluid on-off control structure further includes a buffer assembly 600. The buffer assembly 600 is disposed at the sealing end of the plunger rod body 220, and/or disposed at an end of the housing 300 facing the ventilation port 083 and on an inner wall of the cylinder cavity of the cylinder body 210 near the ventilation port 083. The buffer assembly 600 is configured to buffer collisions between the sealing end of the plunger rod body 220 and the cylinder body 210 and the housing 300 when the sealing end moves within the cylinder cavity.

In this optional embodiment, referring to FIG. 17, the buffer assembly 600 may be disposed at the sealing end of the plunger rod body 220, or at the bottom end of the housing 300 and on the inner wall of the bottom end of the cylinder cavity of the cylinder body 210, or the buffer assembly 600 may be disposed at all of the above positions. When the sealing end of the plunger rod body 220 moves within the cylinder cavity, the buffer assembly 600 may buffer collisions between the sealing end of the plunger rod body 220 and the cylinder body 210 and the housing 300, respectively. This reduces wear caused by collisions between the plunger rod body 220 and the housing 300 and the cylinder body 210, extends the service life of the on-off control structure, and also reduces noise generated by collisions between the plunger rod body 220 and the housing 300 and the cylinder body 210.

It is evident that this optional embodiment further utilizes the buffer assembly 600 to buffer collisions caused by the plunger rod body 220, reducing wear on related components of the on-off control structure to extend its service life and lowering the noise generated during operation of the on-off control structure.

As shown in FIG. 6, in an optional embodiment, the plunger rod body 220 includes a plunger base 221, a plunger main body 222, and a sealing disc 223. The plunger base 221 is disposed in the cylinder cavity, and a circumferential surface of the plunger base 221 is in contact with an inner wall of the cylinder cavity to seal the cylinder cavity; the plunger main body 222 is disposed on a side of the plunger base 221 away from the ventilation port 083, and the plunger main body 222 is provided with a fixed through cavity; the sealing disc 223 is the sealing portion of the driving assembly 200, the sealing disc 223 is provided with a piston through hole 020, the sealing disc 223 is disposed in the fixed through cavity, a first side surface of the sealing disc 223 is in contact with the sealing surface of the first sealing assembly 110, a second side surface of the sealing disc 223 is in contact with the sealing surface of the second sealing assembly 120, and the first side surface and the second side surface of the sealing disc 223 are two opposite side surfaces of the sealing disc 223; where the cylinder body 210 is configured to introduce gas into the cylinder cavity through the ventilation port 083 to drive the plunger base 221 and move the sealing disc 223 in the piston cavity 050, so that the first through hole 011 and the second through hole 012 are in communication through the piston through hole 020.

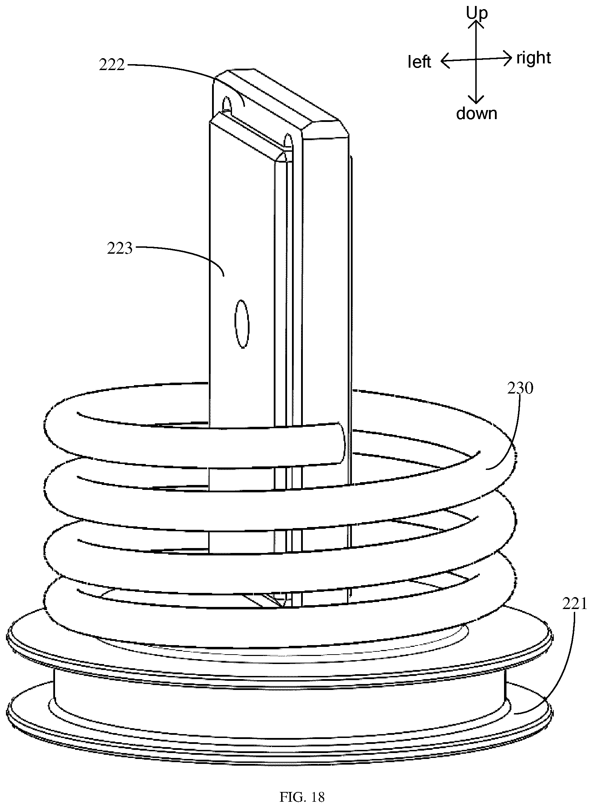

In this optional embodiment, referring to FIG. 6, the plunger base 221 is disposed in the cylinder cavity, and the circumferential surface of the plunger base 221 is in contact with the inner wall of the cylinder cavity, so that the lower side surface of the plunger base 221 seals the cylinder cavity. Simultaneously referring to FIG. 18, the plunger main body 222 is disposed on the upper side surface of the plunger base 221. The plunger main body 222 is a frame-type limiting device, with a fixed through cavity at its central portion. The fixed through cavity is in communication with the exterior of the plunger main body 222 through its left and right sides. The first elastic member 230 is sleeved over the plunger main body 222, with the lower end of the first elastic member 230 contacting the upper side surface of the plunger base 221, and the upper end contacting the lower side surface of the housing 300.

Referring to FIG. 6, the sealing disc 223 is the sealing portion described in the above embodiments. The plunger main body 222 secures the sealing disc 223 within the fixed through cavity of the plunger main body 222. The first side surface of the sealing disc 223 is located on its left side, and the second side surface on its right side. The first side surface of the sealing disc 223 contacts the sealing surface of the first sealing member 112, and the second side surface contacts the sealing surface of the second sealing member 122. The sealing disc 223 is provided with a piston through hole 020 that communicates left and right.

In some implementations, the air supply device pressurizes the cylinder cavity by supplying gas through the ventilation port 083 of the cylinder body 210, thereby driving the plunger base 221 to move upward vertically. This movement drives the plunger main body 222 and the sealing disc 223 to move upward within the piston cavity 050, aligning the piston through hole 020 of the sealing disc 223 with the first through hole 011 and the second through hole 012. At this point, the first through hole 011 and the second through hole 012 are in communication through the piston through hole 020, allowing the polishing fluid to flow through the first through hole 011, the piston through hole 020, and the second through hole 012. If the air supply device does not supply gas to the cylinder cavity of the cylinder body 210, the first elastic member 230 drives the plunger base 221 downward, resetting the plunger main body 222 and the sealing disc 223. At this time, the piston through hole 020 on the sealing disc 223 is misaligned with the first through hole 011 and the second through hole 012, and the non-through-hole portion of the sealing disc 223 blocks the communication between the first through hole 011 and the second through hole 012.

It is evident that this optional embodiment further utilizes the plunger main body 222 to secure the sealing disc 223 within the fixed through cavity of the plunger main body 222, ensuring that the sealing disc 223 remains constrained within the piston cavity 050 during vertical movement and does not disengage. This guarantees the reliability of the fluid on-off control structure in regulating fluid flow.

As shown in FIGS. 6 and 18, in an optional embodiment, the first elastic member 230 is a spring with a helical shape arranged along the axial direction of the cylinder cavity; where the design value of the bottom surface area of the plunger base 221 increases as the wire diameter of the first elastic member 230 increases.

In this optional embodiment, referring to FIGS. 6 and 18, the first elastic member 230 may be selected as a spring with a helical shape arranged along the axial direction of the cylinder cavity. This spring is sleeved over the plunger main body 222, with the lower end of the spring contacting the upper side surface of the plunger base 221 and the upper end contacting the lower side surface of the housing 300.

Since a larger wire diameter results in a higher overall elastic coefficient of the spring, the elastic force of the first elastic member 230 increases accordingly. To ensure that the first elastic member 230 has sufficient elastic force during the reset process to smoothly drive the plunger base 221 to the bottom of the cylinder cavity, enabling the piston through hole 020 of the sealing disc 223 to accurately align with the fluid through holes of the housing 300, it is necessary to increase the wire diameter of the first elastic member 230. Correspondingly, based on the description in the above embodiment, to ensure that the air supply device has sufficient thrust to drive the plunger base 221 to compress the first elastic member 230, the design value of the bottom surface area of the plunger base 221 should increase as the wire diameter of the first elastic member 230 increases.

It is evident that this optional embodiment further increases the return force of the first elastic member 230 by increasing the wire diameter, thereby ensuring that the first elastic member 230 has sufficient elastic force to smoothly reset the plunger base 221 during the return process.

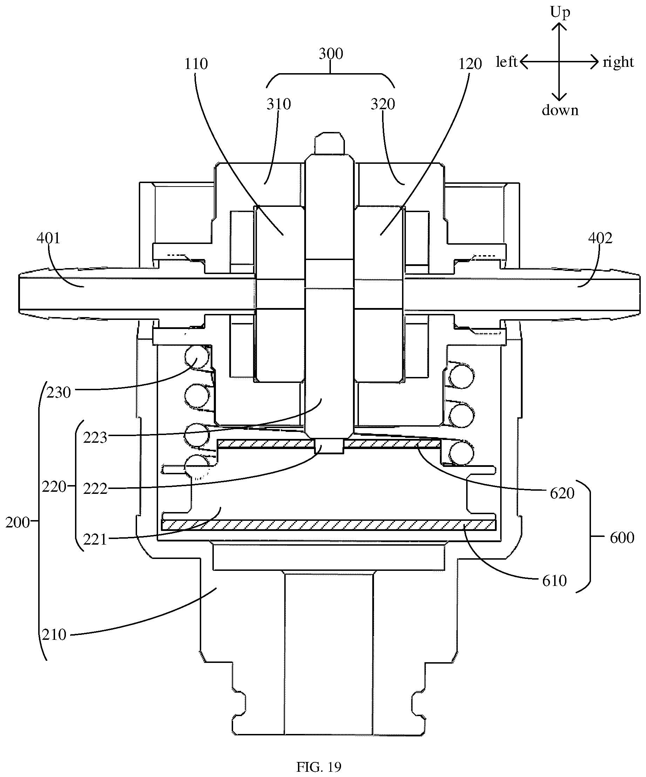

As shown in FIG. 19, in an optional embodiment, the buffer assembly 600 includes a first buffer member 610 and a second buffer member 620. The first buffer member 610 is disposed on the surface of the plunger base 221 facing the ventilation port 083, and the first buffer member 610 is configured to buffer collisions between the plunger base 221 and the cylinder body 210 when the plunger base 221 moves within the cylinder cavity; the second buffer member 620 is disposed on the surface of the plunger base 221 away from the ventilation port 083, and the second buffer member 620 is configured to buffer collisions between the plunger base 221 and the housing 300 when the plunger base 221 moves within the cylinder cavity.

In this optional embodiment, referring to FIG. 19, the lower surface of the plunger base 221 is provided with the first buffer member 610. The first buffer member 610 may buffer the impact when the plunger base 221 moves downward within the cylinder cavity and collides with the bottom of the cylinder cavity, thereby reducing wear caused by collisions between the plunger base 221 and the cylinder body 210 and lowering the noise generated after impact. The upper surface of the plunger base 221 is provided with the second buffer member 620. The second buffer member 620 may buffer the impact when the plunger base 221 moves upward within the cylinder cavity and collides with the bottom of the housing 300, thereby reducing wear caused by collisions between the plunger base 221 and the housing 300 and lowering the noise generated after impact.

It is evident that this optional embodiment further reduces wear caused by collisions between the plunger base 221 and the cylinder body 210 and between the plunger base 221 and the housing 300 by disposing the first buffer member 610 on the surface of the plunger base 221 facing the ventilation port 083 and the second buffer member 620 on the surface of the plunger base 221 away from the ventilation port 083. This extends the service life of the on-off control structure and reduces operational noise.

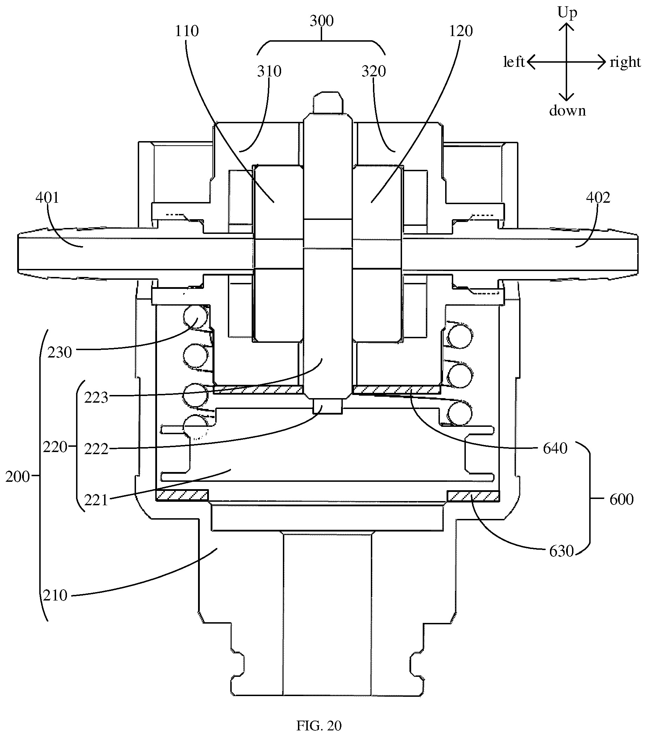

As shown in FIG. 20, in an optional embodiment, the buffer assembly 600 includes a third buffer member 630 and a fourth buffer member 640. The third buffer member 630 is disposed on the inner wall of the cylinder cavity of the cylinder body 210 near the ventilation port 083, and the third buffer member 630 is configured to buffer collisions between the plunger base 221 and the cylinder body 210 when the plunger base 221 moves within the cylinder cavity; the fourth buffer member 640 is disposed on the surface of the housing 300 facing the ventilation port 083, and the fourth buffer member 640 is configured to buffer collisions between the plunger base 221 and the housing 300 when the plunger base 221 moves within the cylinder cavity.

In this optional embodiment, referring to FIG. 20, the inner wall at the bottom of the cylinder cavity of the cylinder body 210 is provided with the third buffer member 630. The third buffer member 630 may buffer the impact when the plunger base 221 moves downward within the cylinder cavity and collides with the bottom of the cylinder cavity, thereby reducing wear caused by collisions between the plunger base 221 and the cylinder body 210 and lowering the noise generated after impact. The lower surface of the housing 300 is provided with the fourth buffer member 640. The fourth buffer member 640 may buffer the impact when the plunger base 221 moves upward within the cylinder cavity and collides with the bottom of the housing 300, thereby reducing wear caused by collisions between the plunger base 221 and the housing 300 and lowering the noise generated after impact.

It is evident that this optional embodiment further reduces wear caused by collisions between the plunger base 221 and the cylinder body 210 and between the plunger base 221 and the housing 300 by disposing the third buffer member 630 on the inner wall of the cylinder cavity of the cylinder body 210 near the ventilation port 083 and the fourth buffer member 640 on the surface of the on-off assembly facing the ventilation port 083. This extends the service life of the on-off control structure and reduces operational noise.

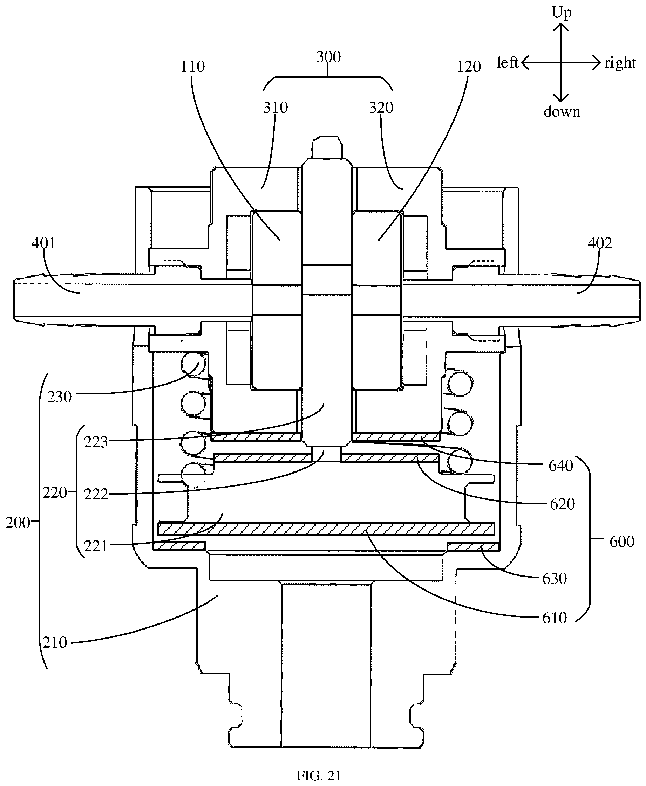

It should be understood that the first buffer member 610, second buffer member 620, third buffer member 630, and fourth buffer member 640 included in the buffer assembly 600 may be adaptively configured based on actual collision damping requirements. For example, in a specific embodiment, as shown in FIG. 21, the first buffer member 610, second buffer member 620, third buffer member 630, and fourth buffer member 640 included in the buffer assembly 600 may be simultaneously mounted at their respective positions described in the above optional embodiments. Simultaneous installation may enhance damping effectiveness and reduce impact-induced wear.

In an optional embodiment, a sealing gasket 503 is provided circumferentially on the plunger base 221, and the sealing gasket 503 contacts the inner wall of the cylinder cavity to seal the cylinder cavity.

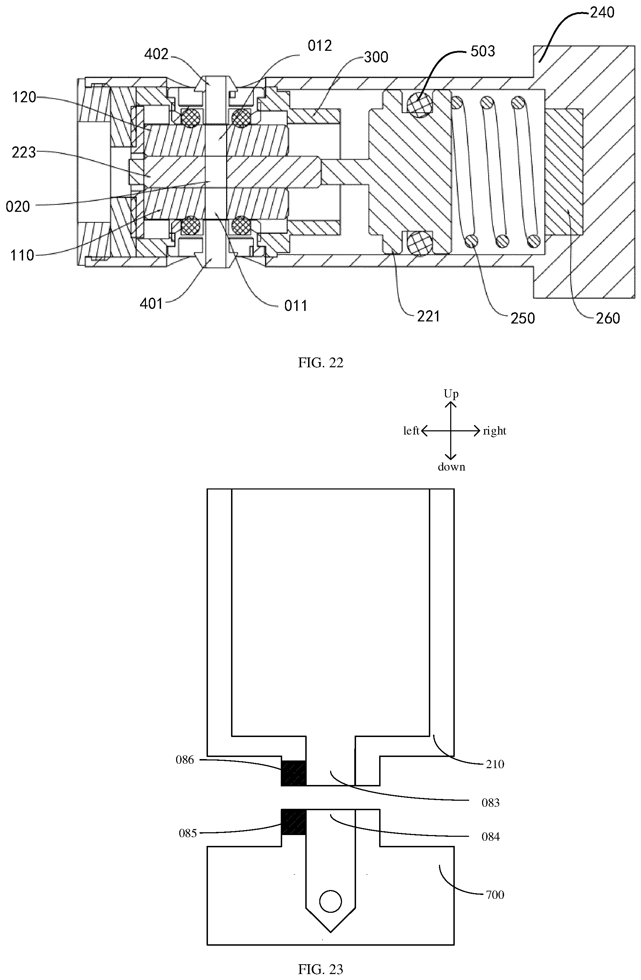

In this optional embodiment, referring to FIG. 22, the sealing gasket 503 is arranged circumferentially on the plunger base 221 and contacts the inner wall of the cylinder cavity of the cylinder body 210. When the air supply device supplies gas to the cylinder cavity within the cylinder body 210, the sealing gasket 503 ensures the sealing of the cylinder cavity below the plunger base 221.

It is evident that this optional embodiment further seals the cylinder cavity through the sealing gasket 503, enabling the cylinder cavity to maintain sufficient air pressure to drive the plunger base 221 upward. This enhances the reliability of the fluid on-off structure in controlling the flow of polishing powder fluid.

As shown in FIG. 22, in an optional embodiment, the driving assembly 200 includes a cylinder body 240, a plunger rod body 220, a second elastic member 250, and an electromagnet 260. The plunger rod body 220, the second elastic member 250, and the electromagnet 260 are disposed in a cylinder cavity of the cylinder body 240, and the second elastic member 250 is disposed between the plunger rod body 220 and the electromagnet 260. The plunger rod body 220 includes a plunger base 221, a plunger main body 222, and a sealing disc 223. The plunger base 221 is made of a ferromagnetic material, the plunger base 221 is disposed in the cylinder cavity, and a circumferential surface of the plunger base 221 is in contact with an inner wall of the cylinder cavity; the plunger main body 222 is disposed on a side of the plunger base 221 away from the electromagnet 260, and the plunger main body 222 is provided with a fixed through cavity; the sealing disc 223 is the sealing portion of the driving assembly 200, the sealing disc 223 is provided with a piston through hole 020, the sealing disc 223 is disposed in the fixed through cavity, a first side surface of the sealing disc 223 is in contact with a sealing surface of the first sealing assembly 110, a second side surface of the sealing disc 223 is in contact with a sealing surface of the second sealing assembly 120, and the first side surface and the second side surface of the sealing disc 223 are two opposite side surfaces of the sealing disc 223; where the electromagnet 260 is configured to drive the plunger base 221 through magnetic force to move the sealing disc 223 in the piston cavity 050, so that the first through hole 011 and the second through hole 012 are in communication through the piston through hole 020; and the second elastic member 250 is configured to reset the plunger base 221, so that the sealing disc 223 blocks the communication between the first through hole 011 and the second through hole 012.

In this optional embodiment, referring to FIG. 22, the driving assembly 200 may include the cylinder body 240, the plunger rod body 220, the second elastic member 250, and the electromagnet 260. The plunger rod body 220 consists of the plunger base 221, the plunger main body 222, and the sealing disc 223. The plunger base 221 of the plunger rod body 220 is made of a ferromagnetic material, and the second elastic member 250 is disposed between the plunger base 221 and the electromagnet 260.

When the electromagnet 260 is energized, the plunger base 221 is attracted and moves toward the electromagnet 260, thereby driving the plunger main body 222 and the sealing disc 223 to move toward the electromagnet 260. This movement aligns the piston through hole 020 on the sealing disc 223 with the first through hole 011 and the second through hole 012, establishing communication between them. When the electromagnet 260 is de-energized, under the action of the second elastic member 250, the piston through hole 020 becomes misaligned with the first through hole 011 and the second through hole 012.

It is evident that this optional embodiment further controls the movement of the plunger rod body 220 through the magnetic force of the electromagnet 260, thereby regulating the on-off state of the fluid on-off control structure. This achieves rapid response and precise control over the on-off state of the polishing powder.

As shown in FIG. 23, in an optional embodiment, the fluid on-off control structure further includes a quick-connect base 700. The quick-connect base 700 is connected to an external air supply device. The connection end of the quick-connect base 700 is provided with a first connection portion 085 and an air guide port 084. The connection end of the cylinder body 210 is provided with a second connection portion 086 and a ventilation port 083, with the ventilation port 083 in communication with the cylinder cavity. The second connection portion 086 of the cylinder body 210 is detachably connected to the first connection portion 085 of the quick-connect base 700, and the ventilation port 083 of the cylinder body 210 is aligned with the air guide port 084 of the quick-connect base 700. The air supply device is configured to supply gas into the cylinder cavity through the air guide port 084 and the ventilation port 083.

In this optional embodiment, the top of the quick-connect base 700 serves as a connection end, and the connection end of the quick-connect base 700 is provided with the first connection portion 085 and the air guide port 084. The bottom of the cylinder body 210 serves as a connection end, the connection end of the cylinder body 210 is provided with the second connection portion 086 and the ventilation port 083. The ventilation port 083 is in communication with the cylinder cavity of the cylinder body 210.

The first connection portion 085 of the quick-connect base 700 may be detachably connected to the second connection portion 086 of the cylinder body 210. The fluid on-off structure allows for quick disassembly of the quick-connect base 700 and the cylinder body 210 when maintenance is required, facilitating efficient maintenance of various components of the fluid on-off structure. The air guide port 084 of the quick-connect base 700 aligns with the ventilation port 083 of the cylinder body 210 after the quick-connect base 700 is connected to the cylinder body 210, enabling the air supply from the air supply device to be delivered to the ventilation port 083 of the cylinder body 210 through the air guide port 084 of the quick-connect base 700.

In some implementations, the air supply device may supply gas to the cylinder cavity inside the cylinder body 210 through the air guide port 084 of the quick-connect base 700 and the ventilation port 083 of the cylinder body 210, thereby controlling the on-off state between the sealing disc 223 and the first sealing member 112 and between the sealing disc 223 and the second sealing member 122.

It is evident that this optional embodiment further enables quick disassembly of the quick-connect base 700 and the cylinder body 210 through the detachable connection between the first connection portion 085 of the quick-connect base 700 and the second connection portion 086 of the cylinder body 210. This facilitates maintenance of various components of the fluid on-off structure when needed, thereby improving the efficiency of maintenance and achieving rapid servicing.

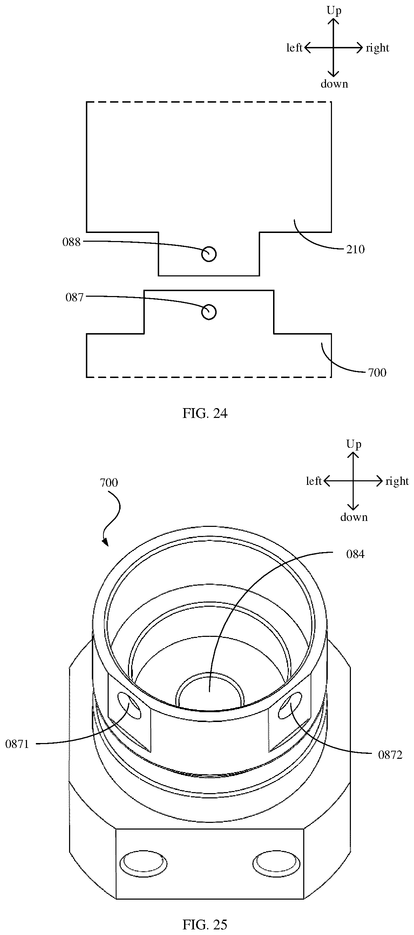

As shown in FIG. 24, in an optional embodiment, the first connection portion 085 includes a base connection hole 087, and the second connection portion 086 includes a cylinder connection hole 088. The base connection hole 087 and the cylinder connection hole 088 are detachably connected by screws.

In this optional embodiment, referring to FIG. 24, the first connection portion 085 of the quick-connect base 700 is provided with the base connection hole 087, and the second connection portion 086 of the cylinder body 210 is provided with the cylinder connection hole 088. When the base connection hole 087 and the cylinder connection hole 088 are aligned, the base connection hole 087 and the cylinder connection hole 088 may be detachably connected using screws, thereby achieving the connection between the quick-connect base 700 and the cylinder body 210.

It is evident that this optional embodiment further utilizes screws to detachably connect the base connection hole 087 and the cylinder connection hole 088, enhancing the stability of the connection between the quick-connect base 700 and the cylinder body 210. Simultaneously, the detachable screw connection facilitates quick disassembly of the quick-connect base 700 and the cylinder body 210 for maintenance of various components of the fluid on-off structure, thereby improving maintenance efficiency.

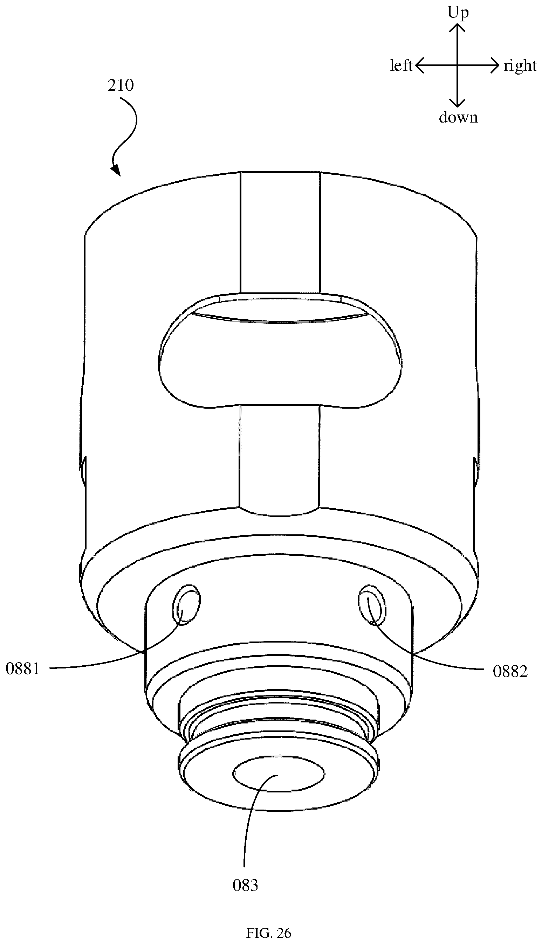

As shown in FIGS. 25 and 26, in an optional embodiment, both the connection end of the quick-connect base 700 and the connection end of the cylinder body 210 are cylindrical structures. The cylindrical radius of the connection end of the quick-connect base 700 is larger than the cylindrical radius of the connection end of the cylinder body 210, allowing the connection end of the quick-connect base 700 to be sleeved over the exterior of the connection end of the cylinder body 210.

In this optional embodiment, referring to FIG. 25, the connection end at the top of the quick-connect base 700 is cylindrical. The bottom of the internal cavity of this cylindrical connection end constitutes the air guide port 084 of the quick-connect base 700. Referring to FIG. 26, the connection end at the bottom of the cylinder body 210 is cylindrical. The bottom of this cylindrical connection end constitutes the ventilation port 083 of the cylinder body 210.

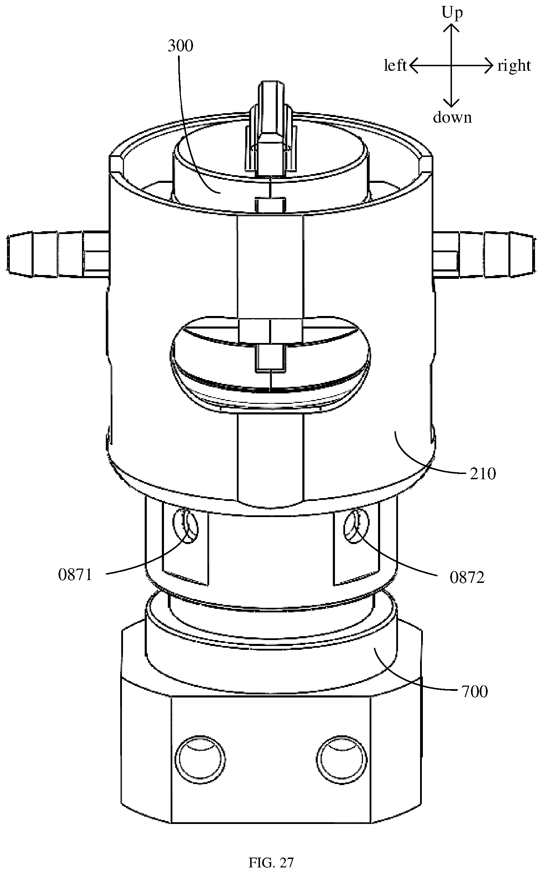

Since the design value of the cylindrical radius of the connection end of the quick-connect base 700 is larger than that of the connection end of the cylinder body 210, referring to FIG. 27, the connection end of the quick-connect base 700 may be sleeved over the exterior of the connection end of the cylinder body 210. The air guide port 084 of the quick-connect base 700 may align with the ventilation port 083 of the cylinder body 210 and remain sealed relative to the exterior, enabling the air supply from the air supply device to be delivered to the ventilation port 083 of the cylinder body 210 through the air guide port 084 of the quick-connect base 700.

It is evident that this optional embodiment enhances the stability of the connection between the quick-connect base 700 and the cylinder body 210 by designing the cylindrical radius of the connection end of the quick-connect base 700 to be larger than that of the connection end of the cylinder body 210.

As shown in FIGS. 25 and 26, in an optional embodiment, the base connection hole 087 includes a first connection hole 0871 and a second connection hole 0872. The first connection hole 0871 and the second connection hole 0872 are disposed on the cylinder wall of the connection end of the quick-connect base 700 with the cylindrical center of the connection end of the quick-connect base 700 as the center and at a preset connection hole angle. The cylinder connection hole 088 includes a third connection hole 0881 and a fourth connection hole 0882. The third connection hole 0881 and the fourth connection hole 0882 are disposed on the cylinder wall of the connection end of the cylinder body 210 with the cylindrical center of the connection end of the cylinder body 210 as the center and at the connection hole angle. The first connection hole 0871 and the third connection hole 0881 are detachably connected by screws, and the second connection hole 0872 and the fourth connection hole 0882 are detachably connected by screws.

In this optional embodiment, the base connection hole 087 of the quick-connect base 700 includes the first connection hole 0871 and the second connection hole 0872, and the cylinder connection hole 088 of the cylinder body 210 includes the third connection hole 0881 and the fourth connection hole 0882.

Referring to FIG. 25, the first connection hole 0871 and the second connection hole 0872 are disposed on the cylinder wall of the connection end of the quick-connect base 700 with the cylindrical center of the connection end of the quick-connect base 700 as the center and at a preset connection hole angle. Simultaneously referring to FIG. 26, the third connection hole 0881 and the fourth connection hole 0882 are disposed on the cylinder wall of the connection end of the cylinder body 210 with the cylindrical center of the connection end of the cylinder body 210 as the center and at the same connection hole angle. Therefore, referring to FIG. 27, when the connection end of the quick-connect base 700 is sleeved over the exterior of the connection end of the cylinder body 210, the first connection hole 0871 may align with the third connection hole 0881, and the second connection hole 0872 may align with the fourth connection hole 0882. It should be understood that the preset connection hole angle may be adaptively adjusted according to actual connection hole configuration requirements.

When the connection end of the base is sleeved over the exterior of the connection end of the cylinder body 210, with the first connection hole 0871 aligned with the third connection hole 0881 and the second connection hole 0872 aligned with the fourth connection hole 0882, the first connection hole 0871 and the third connection hole 0881 may be detachably connected using screws, and the second connection hole 0872 and the fourth connection hole 0882 may be detachably connected using screws.

It is evident that this optional embodiment further enhances the stability of the connection between the quick-connect base 700 and the cylinder body 210 by configuring the base connection hole 087 as the first connection hole 0871 and the second connection hole 0872, and the cylinder connection hole 088 as the third connection hole 0881 and the fourth connection hole 0882, with both the first connection hole 0871 and the second connection hole 0872 and the third connection hole 0881 and the fourth connection hole 0882 arranged at the same angle.

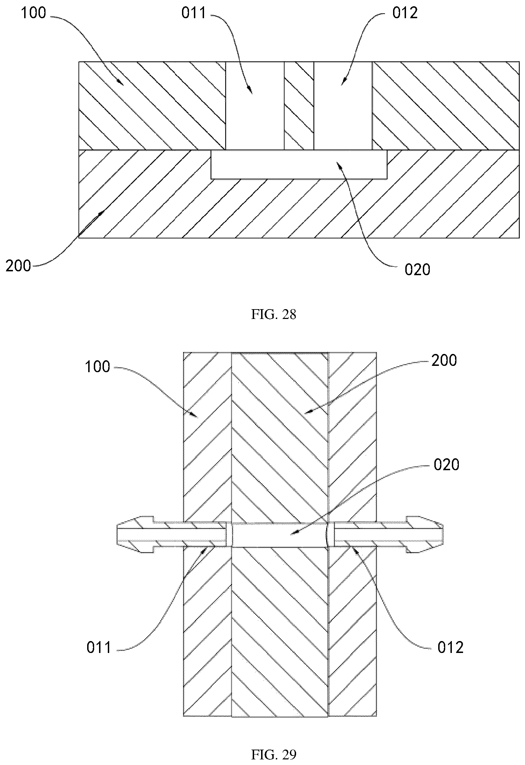

As shown in FIG. 28, in an optional embodiment, the sealing device 100 is a single plate body. The first through hole 011 and the second through hole 012 are both provided on this plate body. The sealing portion is disposed at the lower end of the sealing device 100, and the piston through hole 020 is a groove formed downward from the upper end surface of the sealing portion.

In this optional embodiment, referring to FIG. 28, the sealing device 100 is a single plate body. The first through hole 011 and the second through hole 012 are both provided on this plate body. The sealing portion is closely disposed at the lower end of the sealing device 100, and the piston through hole 020 is a groove formed downward from the upper end surface of the sealing portion. When the lower ends of both the first through hole 011 and the second through hole 012 are located inside the piston through hole 020, the flow path is open, allowing the polishing powder fluid to pass through. When the first through hole 011 and/or the second through hole 012 are located outside the piston through hole 020, the flow path is closed, blocking the polishing powder fluid. The surface roughness of the single plate body used for the sealing device 100 is less than Ra 0.8 µm, and its material hardness is greater than 180 HV. The flatness of the contact surface between the sealing device 100 and the sealing portion is less than 0.01 mm. The sealing portion is also a single plate body with a surface roughness less than Ra 0.8 µm.

As shown in FIG. 29, in an optional embodiment, the sealing device 100 is a cylinder. The first through hole 011 and the second through hole 012 are provided on a side surface of the sealing device 100. The sealing portion is a core rod disposed inside the sealing device 100, and the piston through hole 020 is a through hole penetrating radially through the sealing portion.

In this optional embodiment, referring to FIG. 29, the fluid on-off control structure comprises the sealing device 100 and the driving assembly 200. The driving assembly 200 is provided with the sealing portion, and both the sealing device 100 and the sealing portion are disposed inside the housing 300.

In some implementations, the sealing device 100 is a cylinder made of ceramic material, and the sealing portion is a core rod made of ceramic material. The core rod is fittingly disposed inside the cylinder. The surface roughness of their mating surfaces is less than Ra 0.8 µm, the material hardness is greater than 180 HV, and the flatness of the contact surface between the sealing device 100 and the sealing portion is less than 0.01 mm. The first through hole 011 and the second through hole 012 are provided on the side surface of the sealing device 100, for example, penetrating radially through the cylinder wall. The two holes on the side wall are the first through hole 011 and the second through hole 012, respectively. The piston through hole 020 is a through hole penetrating radially through the sealing portion. The first through hole 011, the second through hole 012, and the piston through hole 020 are located at the same height. To save material and reduce space occupation, the sealing device 100 also serves as the housing. The first through hole 011 and the second through hole 012 are connected to the two diversion connectors described in the above embodiments, respectively.

In an optional embodiment, the driving assembly adopts one of a motor, an electromagnet, or a cylinder, and is configured to control the rotation or movement of the sealing portion.

In this optional embodiment, for the cylindrical sealing device 100 described above, the corresponding driving assembly 200 may adopt a motor. By connecting the sealing portion to the spindle of the motor, intermediate transmission components are eliminated, making the structure more compact and facilitating installation inside the powder handpiece. The motor may drive the sealing portion to rotate circumferentially inside the sealing device 100, thereby allowing the piston through hole 020 to connect or disconnect between the first through hole 011 and the second through hole 012. Furthermore, the driving assembly 200 may also adopt the electromagnet 260 or the cylinder body 210 described in the above embodiments, controlling the movement of the sealing portion through the magnetic force of the electromagnet 260 or the air pressure drive of the cylinder body 210.

In an optional embodiment, the material used for the sealing device 100 and the sealing portion of the driving assembly 200 is ceramic or stainless steel.

The present application also discloses an air polishing dental apparatus, including an apparatus body and the fluid on-off control structure described in the above embodiments of the present application. The fluid on-off control structure is mounted on the apparatus body.

It is evident that the air polishing dental apparatus adopts the above fluid on-off control structure. By controlling the movement of the sealing device 100 and/or the sealing portion through the driving assembly 200, the target through hole 010 on the sealing device 100 and the piston through hole 020 on the sealing portion are connected or disconnected. During this process, the sealing device 100 and the sealing portion are less prone to deformation due to external squeezing force, meaning both the sealing device 100 and the sealing portion are less susceptible to wear. This improves the airtightness of the fluid on-off control structure and ensures higher reliability and longer service life.

## Claims

1. A fluid on-off control structure, comprising:
a sealing device, wherein the sealing device is provided with a target through hole;
a driving assembly, wherein the driving assembly is provided with a sealing portion, the sealing portion is provided with a piston through hole, and at least one surface contact seal is provided between the sealing portion and the sealing device; the driving assembly is configured to drive the sealing device and/or the sealing portion to move, so that the piston through hole and the target through hole are connected or misaligned.

2. The fluid on-off control structure according to claim 1, wherein the target through hole comprises a first through hole and a second through hole; wherein the driving assembly is configured to drive the sealing device and/or the sealing portion, so that the piston through hole is connected or misaligned between the first through hole and the second through hole.

3. The fluid on-off control structure according to claim 2, wherein the fluid on-off control structure further comprises:
a housing, wherein the housing is provided with a piston cavity;
the sealing device comprises:
a first sealing assembly, wherein the first sealing assembly is disposed on a first inner surface of the piston cavity, the first sealing assembly is provided with a pre-compression portion, the pre-compression portion of the first sealing assembly applies a preload force to a sealing surface of the first sealing assembly, and the first sealing assembly is provided with the first through hole;
a second sealing assembly, wherein the second sealing assembly is disposed on a second inner surface of the piston cavity, the second sealing assembly is provided with a pre-compression portion, the pre-compression portion of the second sealing assembly applies a preload force to a sealing surface of the second sealing assembly, and the second sealing assembly is provided with the second through hole; wherein the first inner surface and the second inner surface are two opposite inner surfaces of the piston cavity, the sealing surface of the first sealing assembly and the sealing surface of the second sealing assembly are oppositely disposed, and the first through hole and the second through hole are oppositely disposed;
wherein the sealing portion of the driving assembly is in contact with the sealing surface of the first sealing assembly and the sealing surface of the second sealing assembly, respectively, the sealing portion of the driving assembly is configured to move in the piston cavity, so that the first through hole and the second through hole are in communication through the piston through hole, or so that the sealing portion blocks the communication between the first through hole and the second through hole.

4. The fluid on-off control structure according to claim 3, wherein the first sealing assembly (110) comprises:
a first pre-compression member, wherein the first pre-compression member is disposed on the first inner surface of the piston cavity, the first pre-compression member is provided with a first sub-through hole;
a first sealing member, wherein the first sealing member is disposed on a side of the first pre-compression member away from the first inner surface of the piston cavity, the first sealing member is provided with a second sub-through hole; wherein the first sub-through hole and the second sub-through hole are oppositely disposed, the first sub-through hole and the second sub-through hole are in communication to form the first through hole, the sealing surface of the first sealing assembly is the sealing surface of the first sealing member, and the sealing surface of the first sealing member is a surface of the first sealing member away from the first pre-compression member.

5. The fluid on-off control structure according to claim 4, wherein the second sealing assembly comprises:
a second pre-compression member, wherein the second pre-compression member is disposed on the second inner surface of the piston cavity, the second pre-compression member is provided with a third sub-through hole;
a second sealing member, wherein the second sealing member is disposed on a side of the second pre-compression member away from the second inner surface of the piston cavity, the second sealing member is provided with a fourth sub-through hole; wherein the third sub-through hole and the fourth sub-through hole are oppositely disposed, the third sub-through hole and the fourth sub-through hole are communicated to form the second through hole, the sealing surface of the second sealing assembly is the sealing surface of the second sealing member, and the sealing surface of the second sealing member is a surface of the second sealing member away from the second pre-compression member, the sealing surface of the second sealing member and the sealing surface of the first sealing member are oppositely disposed.

6. The fluid on-off control structure according to claim 5, wherein the constituent material of the first pre-compression member and the constituent material of the second pre-compression member are soft materials or elastic materials, respectively.

7. The fluid on-off control structure according to claim 3, wherein the first inner surface of the piston cavity is provided with a first fixing groove, and the second inner surface of the piston cavity is provided with a second fixing groove;
wherein the first sealing assembly is disposed in the first fixing groove, and the second sealing assembly is disposed in the second fixing groove.

8. The fluid on-off control structure according to claim 7, wherein an inner wall of the piston cavity of the housing is provided with a target collection groove, the first through hole and the second through hole are respectively in communication with an external air polishing diversion pipe body, the air polishing diversion pipe body is configured to convey a polishing powder fluid, and the target collection groove is configured to collect residual powder of the polishing powder fluid in the piston cavity.

9. The fluid on-off control structure according to claim 8, wherein the target collection groove comprises a first collection groove and a second collection groove;
the first inner surface of the piston cavity is provided with the first collection groove, the second inner surface of the piston cavity is provided with the second collection groove; the first collection groove is in communication with the first fixing groove, the second collection groove is in communication with the second fixing groove; and the first collection groove and the second collection groove are both configured to collect residual powder of the polishing powder fluid in the piston cavity.

10. The fluid on-off control structure according to claim 9, wherein the first collection groove comprises a first sub-collection groove and a second sub-collection groove, the first sub-collection groove is disposed at a first end of the first fixing groove, the second sub-collection groove is disposed at a second end of the first fixing groove, and the first end and the second end of the first fixing groove are two opposite ends of the first fixing groove in a radial direction of the piston cavity.

11. The fluid on-off control structure according to claim 10, wherein the second collection groove comprises a third sub-collection groove and a fourth sub-collection groove, the third sub-collection groove is disposed at a first end of the second fixing groove, the fourth sub-collection groove is disposed at a second end of the second fixing groove, and the first end and the second end of the second fixing groove are two opposite ends of the second fixing groove in the radial direction of the piston cavity.

12. The fluid on-off control structure according to claim 9, wherein the housing is provided with a target powder discharge port in the radial direction of the piston cavity, the target powder discharge port is in communication with the piston cavity, and the target powder discharge port is configured to provide a discharge channel for residual powder of the polishing powder fluid in the piston cavity to be discharged to an outside of the housing.

13. The fluid on-off control structure according to claim 12, wherein the target powder discharge port comprises a first powder discharge port and a second powder discharge port;
the housing is provided with the first powder discharge port and the second powder discharge port in the radial direction of the piston cavity, the first powder discharge port and the second powder discharge port are oppositely disposed, both the first powder discharge port and the second powder discharge port are communicated with the piston cavity, and both the first powder discharge port and the second powder discharge port are configured to discharge residual powder of the polishing powder fluid in the piston cavity to an outside of the housing.

14. The fluid on-off control structure according to claim 13, wherein the housing comprises:
a first base, wherein the first base is provided with a third through hole, a connection side of the first base is provided with a first piston groove, an inner surface of the first piston groove is provided with the first fixing groove and the first collection groove, a first end of the first piston groove is provided with a first powder discharge groove, a second end of the first piston groove is provided with a second powder discharge groove, and the third through hole is communicated with the first fixing groove; the first sealing assembly is disposed in the first fixing groove, and the first through hole of the first sealing assembly and the third through hole of the first base are oppositely disposed;
a second base, wherein the second base is provided with a fourth through hole, a connection side of the second base is provided with a second piston groove, an inner surface of the second piston groove is provided with the second fixing groove and the second collection groove, a first end of the second piston groove is provided with a third powder discharge groove, a second end of the second piston groove is provided with a fourth powder discharge groove, and the fourth through hole is communicated with the second fixing groove; the second sealing assembly is disposed in the second fixing groove, and the second through hole of the first sealing assembly and the fourth through hole of the second base are oppositely disposed;
wherein the first end and the second end of the first piston groove are two opposite ends of the first piston groove, and the first end and the second end of the second piston groove are two opposite ends of the second piston groove; the connection side of the first base and the connection side of the second base are oppositely disposed, and the connection side of the first base is connected to the connection side of the second base, so that the first piston groove and the second piston groove form the piston cavity, the first powder discharge groove and the third powder discharge groove form the first powder discharge port, and the second powder discharge groove and the fourth powder discharge groove form the second powder discharge port.

15. The fluid on-off control structure according to claim 14, further comprising:
a first diversion connector, wherein the first diversion connector is disposed at the third through hole of the first base, and interfaces of the first diversion connector are respectively communicated with the third through hole of the first base and the first through hole of the first sealing assembly;
a second diversion connector, wherein the second diversion connector is disposed at the fourth through hole of the second base, and interfaces of the second diversion connector are respectively communicated with the fourth through hole of the second base and the second through hole of the second sealing assembly.

16. The fluid on-off control structure according to claim 3, wherein a first sealing ring is provided between the housing and a side surface of the first sealing assembly and between the housing and a side surface of the second sealing assembly.

17. The fluid on-off control structure according to claim 3, wherein a second sealing ring for sealing is provided between the sealing portion and the first sealing assembly and between the sealing portion and the second sealing assembly.

18. The fluid on-off control structure according to claim 3, wherein the driving assembly comprises:
a cylinder body, wherein the cylinder body is provided with a cylinder cavity and a ventilation port;
a plunger rod body, wherein the sealing portion is disposed on the plunger rod body, the plunger rod body is disposed in the cylinder cavity, and the sealing portion of the plunger rod body is in contact with the sealing surface of the first sealing assembly and the sealing surface of the second sealing assembly, respectively;
a first elastic member, wherein the first elastic member is disposed between the plunger rod body and the housing in the cylinder cavity;
wherein the cylinder body is configured to introduce gas into the cylinder cavity through the ventilation port, so that the introduced gas acts on the plunger rod body to drive the sealing portion of the plunger rod body to move in the piston cavity, thereby communicating the first through hole and the second through hole through the piston through hole; and the first elastic member is configured to reset the plunger rod body, so that the sealing portion on the plunger rod body blocks the communication between the first through hole and the second through hole.

19. The fluid on-off control structure according to claim 18, wherein a design value of a bottom surface area of a sealing end of the plunger rod body increases as an elastic coefficient of the first elastic member increases.

20. The fluid on-off control structure according to claim 18, wherein the cylinder body is provided with a first powder cleaning port and a second powder cleaning port, and both the first powder cleaning port and the second powder cleaning port are communicated with the cylinder cavity.

21. The fluid on-off control structure according to claim 18, further comprising:
a buffer assembly, wherein the buffer assembly is disposed at the sealing end of the plunger rod body, and/or disposed at an end of the housing facing the ventilation port and on an inner wall of the cylinder cavity of the cylinder body near the ventilation port, and the buffer assembly is configured to buffer collisions between the sealing end of the plunger rod body and the cylinder body and the housing when the sealing end moves within the cylinder cavity.

22. The fluid on-off control structure according to claim 21, wherein the plunger rod body comprises:
a plunger base, wherein the plunger base is disposed in the cylinder cavity, and a circumferential surface of the plunger base is in contact with an inner wall of the cylinder cavity to seal the cylinder cavity;
a plunger main body, wherein the plunger main body is disposed on a side of the plunger base away from the ventilation port, and the plunger main body has a fixed through cavity;
a sealing disc, wherein the sealing disc is the sealing portion of the driving assembly, the sealing disc has a piston through hole, the sealing disc is disposed in the fixed through cavity, a first side surface of the sealing disc is in contact with a sealing surface of the first sealing assembly, a second side surface of the sealing disc is in contact with a sealing surface of the second sealing assembly, and the first side surface and the second side surface of the sealing disc are two opposite side surfaces of the sealing disc;
wherein the cylinder body is configured to introduce gas into the cylinder cavity through the ventilation port to drive the plunger base and move the sealing disc in the piston cavity, so that the first through hole and the second through hole are in communication through the piston through hole.

23. The fluid on-off control structure according to claim 22, wherein the first elastic member is a spring with a helical shape arranged along the axial direction of the cylinder cavity; wherein a design value of a bottom surface area of the plunger base increases as a wire diameter of the first elastic member increases.

24. The fluid on-off control structure according to claim 22, wherein the buffer assembly comprises:
a first buffer member, wherein the first buffer member is disposed on a surface of the plunger base facing the ventilation port, and the first buffer member is configured to buffer collisions between the plunger base and the cylinder body when the plunger base moves within the cylinder cavity;
a second buffer member, wherein the second buffer member is disposed on a surface of the plunger base away from the ventilation port, and the second buffer member is configured to buffer collisions between the plunger base and the housing when the plunger base moves within the cylinder cavity.

25. The fluid on-off control structure according to claim 22, wherein the buffer assembly comprises:
a third buffer member, wherein the third 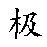 buffer member is disposed on an inner wall of the cylinder cavity of the cylinder body near the ventilation port, and the third buffer member is configured to buffer collisions between the plunger base and the cylinder body when the plunger base moves within the cylinder cavity;
a fourth buffer member, wherein the fourth buffer member is disposed on a surface of the housing facing the ventilation port, and the fourth buffer member is configured to buffer collisions between the plunger base and the housing when the plunger base moves within the cylinder cavity.

26. The fluid on-off control structure according to claim 22, wherein a sealing gasket is provided circumferentially on the plunger base, and the sealing gasket contacts an inner wall of the cylinder cavity to seal the cylinder cavity.

27. The fluid on-off control structure according to claim 3, wherein the driving assembly comprises a cylinder body, a plunger rod body, a second elastic member, and an electromagnet, wherein the plunger rod body, the second elastic member, and the electromagnet are disposed in a cylinder cavity of the cylinder body, and the second elastic member is disposed between the plunger rod body and the electromagnet;
the plunger rod body comprises:
a plunger base, wherein the plunger base is made of a ferromagnetic material, the plunger base is disposed in the cylinder cavity, and a circumferential surface of the plunger base is in contact with an inner wall of the cylinder cavity;
a plunger main body, wherein the plunger main body is disposed on a side of the plunger base away from the electromagnet, and the plunger main body is provided with a fixed through cavity;
a sealing disc, wherein the sealing disc is the sealing portion of the driving assembly, the sealing disc is provided with a piston through hole, the sealing disc is disposed in the fixed through cavity, a first side surface of the sealing disc is in contact with the sealing surface of the first sealing assembly, a second side surface of the sealing disc is in contact with the sealing surface of the second sealing assembly, and the first side surface and the second side surface of the sealing disc are two opposite side surfaces of the sealing disc;
wherein the electromagnet is configured to drive the plunger base through magnetic force to move the sealing disc in the piston cavity, so that the first through hole and the second through hole are in communication through the piston through hole; and the second elastic member is configured to reset the plunger base, so that the sealing disc blocks the communication between the first through hole and the second through hole.

28. The fluid on-off control structure according to claim 18, further comprising:
a quick-connect base, wherein the quick-connect base is connected to an external air supply device, and a connection end of the quick-connect base has a first connection portion and an air guide port;
wherein a connection end of the cylinder body has a second connection portion and a ventilation port, the ventilation port is communicated with the cylinder cavity, the second connection portion of the cylinder body is detachably connected to the first connection portion of the quick-connect base, and the ventilation port of the cylinder body is aligned with the air guide port of the quick-connect base; the air supply device is configured to supply gas into the cylinder cavity through the air guide port and the ventilation port.

29. The fluid on-off control structure according to claim 28, wherein the first connection portion comprises a base connection hole, the second connection portion comprises a cylinder connection hole, and the base connection hole and the cylinder connection hole are detachably connected by screws.

30. The fluid on-off control structure according to claim 29, wherein both the connection end of the quick-connect base and the connection end of the cylinder body are cylindrical structures, a cylindrical radius of the connection end of the quick-connect base is larger than a cylindrical radius of the connection end of the cylinder body, so that the connection end of the quick-connect base can be sleeved over an exterior of the connection end of the cylinder body.

31. The fluid on-off control structure according to claim 30, wherein the base connection hole comprises a first connection hole and a second connection hole, the first connection hole and the second connection hole are disposed on a cylinder wall of the connection end of the quick-connect base with a cylindrical center of the connection end of the quick-connect base as a center and at a preset connection hole angle; the cylinder connection hole comprises a third connection hole and a fourth connection hole, the third connection hole and the fourth connection hole are disposed on a cylinder wall of the connection end of the cylinder body with a cylindrical center of the connection end of the cylinder body as a center and at the connection hole angle;
wherein the first connection hole and the third connection hole are detachably connected by screws, and the second connection hole and the fourth connection hole are detachably connected by screws.

32. The fluid on-off control structure according to claim 1, wherein a surface roughness of the sealing device and the sealing portion is less than Ra 0.2 µm, a material hardness is greater than 500 HV, and a flatness of a contact surface between the sealing device and the sealing portion is less than 0.005 mm.

33. The fluid on-off control structure according to claim 2, wherein the sealing device is a single plate body, the first through hole and the second through hole are both provided on the plate body, the sealing portion is disposed at a lower end of the sealing device, and the piston through hole is a groove formed downward from an upper end surface of the sealing portion.

34. The fluid on-off control structure according to claim 2, wherein the sealing device is a cylinder, the first through hole and the second through hole are provided on a side surface of the sealing device, the sealing portion is a core rod disposed inside the sealing device, and the piston through hole is a through hole penetrating radially through the sealing portion.

35. The fluid on-off control structure according to claim 34, wherein the driving assembly adopts one of a motor, an electromagnet, or a cylinder, and is configured to control rotation or movement of the sealing portion.

36. The fluid on-off control structure according to claim 33 or 34, wherein a surface roughness of the sealing device and the sealing portion is less than Ra 0.8 µm, a material hardness is greater than 180 HV, and a flatness of a contact surface between the sealing device and the sealing portion is less than 0.01 mm.

37. The fluid on-off control structure according to claim 1, the sealing device and the sealing portion are made of ceramic material or stainless steel material.

38. An air polishing dental apparatus, comprising:
an apparatus body;
the fluid on-off control structure according to any one of claims 1 to 37, wherein the fluid on-off control structure is mounted on the apparatus body.
